# EUROPEAN PATENT SPECIFICATION

(11) **EP 2 704 240 B1**
(45) Date of publication and mention of the grant of the patent: **18.10.2017**
(21) Application number: 12774842.4
(22) Date of filing: 08.03.2012
(51) Int. Cl.: H01M 8/00, H01M 8/04

(54) **HYDROGEN FUEL CELL AND SYSTEM THEREOF, AND METHOD FOR DYNAMIC VARIABLE HUMIDITY CONTROL**
WASSERSTOFFBRENNSTOFFZELLEN UND SYSTEM DAFÜR SOWIE VERFAHREN FÜR DYNAMISCHE VARIABLE FEUCHTIGKEITSREGELUNG
PILE À COMBUSTIBLE À HYDROGÈNE ET SON SYSTÈME, ET PROCÉDÉ POUR RÉGULATION D'HUMIDITÉ VARIABLE DYNAMIQUE

(30) Priority: 21.04.2011 CN 201110100207
(43) Date of publication of application: 05.03.2014
(73) Proprietor: Li, Tieliu, Beijing 100012 (CN)
(72) Inventor: Li, Tieliu, Beijing 100012 (CN)
(74) Representative: Onsagers AS
(86) International application number: PCT/CN2012/072086
(87) International publication number: WO 2012/142881

(56) References cited:
- EP-A1- 0 744 784
- CN-Y- 2 760 773
- CN-Y- 2 762 365
- JP-A- 2009 230 969
- US-A- 4 508 793
- US-A1- 2004 038 097
- US-A1- 2005 164 062
- US-B2- 6 699 610

## Description

### Technical field of the invention

The present invention relates to the technical field of fuel cells and more particularly to a hydrogen fuel cell and system thereof, and a method for dynamic variable humidity control.

### Background of the invention

Application researches of hydrogen fuel cells (mainly referring to Proton Exchange Membrane Fuel Cells (PEFC)) have begun since the early 1990s, and fuel cell electric vehicles as well as distributed and portable power supply prototypes have been manufactured. Prototype vehicles and prototype machines have been developed and produced out of laboratories in the 21^{st} century. Generally, a fuel cell stack assembly in a hydrogen cell system includes a cell pack. An insulating plate and a power supply plate are provided at the two ends of the cell pack. The power supply plate is connected with a power source terminal and functions as cell power source output. The insulating plate is used for insulating from a housing, wherein the cell pack is composed of a plurality of individual cells, and the core of each unit cell is mainly a membrane electrode. Besides the fuel cell stack assembly for power generation, the hydrogen fuel cell system further includes many indispensable components, e.g. a distribution system of working gases (gas hydrogen as a fuel and air as an oxidant). The working gases need to be humidified and heated according to the working mode of the fuel cell stack, thus a humidifying system and a heating system is necessary. An exceeded high temperature may have an adverse effect on other components, thus a cooling system is also required at the same time. A cooling system of a traditional hydrogen fuel cell system is of a water-cooling type.

For years, the hydrogen fuel cell system with the above structure, which is complicated and expensive, has not been industrialized and commercialized, and its commercialization and market-based development has been hindered by several major technical defects of the hydrogen fuel cell system, including the following major problems:
A matched water management system is needed for water-cooling heat dissipation, including a water storage tank, a heat exchanger, a stack internal heat dissipation system, a water purification device, a water pump and a water humidifying system and a heating system, thus the system is complicated, bulky, heavy, high cost and it is difficult for maintenance, and hard to store in an environment with a subzero temperature.

The hydrogen fuel and the oxidant air must be humidified and heat when the fuel cells is running at high temperature operation (70°C to 80°C). The lifetime of a proton exchange membrane in the membrane electrode can be shortened at high temperature. Similarly, the system is complicated and expensive.

A gas compression process needs to consume 10% to 25% of the generated electric power due to a high-pressure operation mode (the air needs to be pressurized to 0.5Kg/cm² - 2 Kg/cm²). In addition, internal sealing of the cell pack is difficult and a compressed air pump has a short lifetime due to high pressure operation. Additionally, the system is heavy, high cost and noisy, which is one of the major technical obstacles that delay the fuel cell industrialization.

In addition, a cell pack in a traditional hydrogen fuel cell power generation system applies an end plate-pull rob encapsulating structure. Such an encapsulating structure is heavy and bad structural stability, and is only applicable to the technical methods of inside plate gas distribution and water-cooling heat dissipation.

Since the working pressure of hydrogen and air is relatively high, all high-pressure fuel cells apply the methods of inside plate gas distribution and water-cooling heat dissipation. In other words, through holes of hydrogen, air and water are provided on a polar plate of a cell and strictly sealed and separated with a polar plate reaction area to form a gas distribution channel and a water distribution channel. The relatively large through holes reduce the structural strength of the polar plate, thus reducing the fuel cell stack reliability. In addition, the effective reaction area (i.e. power generation area) of the polar plate is reduced to reduce the power generation efficiency.

US4508793A discloses an air-cooled fuel cell system, which comprises a cell stack including substacks and cooling plates arranged between neighbouring two substacks, each substack comprising a plurality of unit cells, and bipolar plates each having fuel channels and process air channels and being arranged between two unit cells, said unit cells and bipolar plates being arranged in a stack and electrically connected in series. The fuel cell system further comprises a process air inlet manifold mounted on one peripheral face of the cell stack where inlets of said process air channels are opened, a cooling air manifold mounted on said process air inlet manifold, said cooling plates extending from the peripheral face of the cell stack and passing through the process air manifold in such a manner that the cooling air passages provided therein are communicated with said cooling air manifold.

US2005/164026A1 discloses a cooling apparatus of a fuel cell system, which includes a housing for providing a space for receiving an electricity generating unit and a cooling medium supply unit connected to the housing to supply the cooling medium to the electricity generating unit. The housing has a body having a space for receiving the electricity generating unit. A guide section is connected to the body to collect the cooling medium passing through electricity generating unit. An exhaust unit is connected to the guide section to exhaust the cooling medium to outside of the housing.

Moreover, a traditional fuel cell power generation system generally applies a constant humidity control working mode at a relatively high working temperature, which is easy to cause local liquid water condensation in a cell pack, and a gas flow channel will be blocked by serious local liquid water condensation to cause the phenomenon of "reverse polarization" to result in a cell pack failure. Therefore, under such a control mode, the gas in a hydrogen channel needs to be exhausted periodically to exhaust accumulated water in order to prevent water from being accumulated in the fuel cell, which not only influences stable operation of the cell, but also reduces the power generation efficiency of the fuel cell because part of the fuel-hydrogen is exhausted. According to some trial fuel cells at present, hydrogen need to be exhausted for 1 to 2 seconds every 10 seconds the fuel cells work, which reduces the overall efficiency by about 10%.

When working in an urban environment, harmful gases (SO₂, HS, HCX, HNX) may enter the cathode of the fuel cell with working gases, thus causing significant problems including catalyst poisoning and reduction of cell performance. In 2008, the performance of a Germany fuel cell coach in a demonstration operation in Beijing is reduced by more than 40% within 900 hours and cannot be used continuously. The performances of many fuel cell field cars and commercial cars in Shanghai World Expo are greatly reduced, most likely due to harmful gases with high local concentrations from several surrounding power stations and refuse incineration plants. It is introduced Beijing environment assessment data that the average SO₂ concentration of the whole year is not higher than the national standard (0.03 part per million, i.e. a mass concentration of 0.03PPM). However, the SO₂ concentrations of some measurement points around power stations of the Fourth-ring Road and the Fifth-ring Road are 10 times as much as the average SO₂ concentration of the whole year. Sometimes, the concentration of SO₂ released when big trucks and buses pass may reach 1 to 5 PPMs, which is more than 100 times as much as the yearly average concentration. Fuel cells can be hardly used in cities if there are no any technical measures.

### Summary of the invention

The technical problem to be solved by the present invention is to provide a hydrogen fuel cell and system thereof, and a method for dynamic variable humidity control to improve power generation efficiency, reduce costs and increase lifetime.

To solve the technical problem above, the present invention provides a hydrogen fuel cell, including a fuel cell stack assembly and an outside plate gas distribution device; the fuel cell stack assembly includes a first insulating plate, a first power supply plate, a cell pack, a second power supply plate and a second insulating plate set in series; the first power supply plate and the second power supply plate function as the anode output and the cathode output of the cell pack, respectively; the fuel cell stack assembly is encapsulated with a hard housing; the outside plate gas distribution device is fixed on the hard housing; the outside plate gas distribution device includes a working gas flow distribution device and a heat dissipation gas distribution device; the working gas flow distribution device is provided with a fan mount for connecting with a working fan, and the working gas flow distribution device extends into the inner cavity of the housing from outside of the housing; the gas flow outlet of the working gas flow distribution device is connected with the air inlet gas distribution nozzle of each unit cell in the cell pack; the heat dissipation gas distribution device includes a heat dissipation channel set outside the housing and interconnected with the inner cavity of the housing, and a heat dissipation port set on the housing; the heat dissipation channel is provided with a heat dissipation fan mount for connecting with a heat dissipation fan.

Further, in the hydrogen fuel cell, the working gas flow distribution device includes a gas distribution manifold, a gas distribution groove and a gas flow outlet; the gas distribution manifold is located outside the housing and fixed on the top plate of the housing; the gas distribution manifold is interconnected with the gas distribution groove; the gas distribution groove extends into the inner cavity of the housing; the gas flow outlet is formed on the bottom of the gas distribution groove; the gas flow outlet is interconnected with the air inlet gas distribution nozzle of each unit cell in the cell pack;
the gas distribution manifold is provided with the fan mount for connecting with the working fan.

Specifically, the outside plate gas distribution device in the hydrogen fuel cell is a single-side gas distribution device; both the working gas flow distribution device and the heat dissipation gas distribution device are set on the top plate of the housing.

The single-side gas distribution device has the following specific structure: one end of the heat dissipation channel is an open end; the open end is provided with the heat dissipation fan mount, the heat dissipation channel is lowered gradually towards the other end from the open end and fixed and covered on the top plate of the housing; the heat dissipation fan blows air into the inner cavity of the housing via the heat dissipation channel to cool the fuel cell stack assembly; heat dissipation air obtained after cooling the fuel cell stack assembly is exhausted from the heat dissipation port on the housing.

In addition, one end of the gas distribution manifold is an open end; the open end is provided with the working fan mount, the gas distribution manifold is lowered gradually towards the other end from the open end.

The open end of the gas distribution manifold and the open end of the heat dissipation channel are located on two opposite sides of the top plate of the hard housing, respectively.

Preferably, the heat dissipation channel is provided with a gas flow diversion damping groove.

In the hydrogen fuel cell, the outside plate gas distribution device is a double-side gas distribution device; the working gas flow distribution device is set on the top plate of the housing; the heat dissipation channel of the heat dissipation gas distribution device is set on the bottom plate of the housing.

The double-side gas distribution device has the following specific structure: the heat dissipation channel is a heat dissipation air collection chamber interconnected with the inner cavity of the housing; the heat dissipation air collection chamber is interconnected with the heat dissipation fan mount; the heat dissipation port is set on the top plate of the housing; the heat dissipation fan blows air into the inner cavity of the housing or pumps air out of the inner cavity of the housing; the air flows out of the inner cavity of the housing or flows into the inner cavity of the housing via the heat dissipation port on the top plate of the hard housing;
in the hydrogen fuel cell, the hard housing for encapsulating the fuel cell stack assembly includes a gland, two concave-shaped plates, a top plate, a bottom plate, a side plate and a flange plate;
the two concave-shaped plates are set oppositely, one end of a concave-shaped plate is fixedly connected with the side plate and the other end is fixed with the gland through the flange plate;
power source interfaces of two kinds of polarities are set on the gland and the side plate, respectively;
the gland and the side plate are provided with a fuel gas inlet and a fuel gas outlet, respectively.

In the hydrogen fuel cell, the flange plate and the gland are encapsulated by the following specific method: 1. the two sides of the upper edge of the gland are provided with an arc-shaped locking face concave downwards; the portion on the flange plate opposite to the arc-shaped locking face is provided with an arc-shaped locking face concave upwards; when the gland is pressed into the flange plate by an external pressure, a space is enclosed by the arc-shaped locking face concave downwards and the arc-shapedlocking face concave upwards, and an encapsulating pin or a bolt is provided in the space; 2. the gland may be fixed on the flange plate by the bolt directly.

Preferably, a pressure compensator is provided between the power supply plate in the inner cavity of the housing and the gland; the pressure compensator is composed of metal plates and elastic bodies laminated in a staggered manner.

In the hydrogen fuel cell, the cell pack includes a plurality of individual cells connected in series, each of the individual cells includes an anode guide plate, a membrane electrode and a cathode guide plate; the front of the anode guide plate and the front of the cathode guide plate are adjacent to two side surfaces of the membrane electrode, respectively; the back of the anode guide plate is adjacent to the cathode guide plate of another unit cell; the back of the cathode guide plate is adjacent to the anode guide plate of another unit cell; the anode guide plate is provided with a main hydrogen gas inlet and a main hydrogen gas outlet, the front of the anode guide plate is provided with a hydrogen guide groove and the back is provided with a first air inlet gas distribution nozzle and a first air inlet groove interconnected with the first air inlet gas distribution nozzle; the back of the anode guide plate is further provided with a first heat dissipation groove and a first air exhaust groove; the cathode guide plate is provided with a main hydrogen gas inlet and a main hydrogen gas outlet, the front of the cathode guide plate is provided with an air inlet, an air outlet and an air guide groove, and the back is provided with a second air inlet gas distribution nozzle and a second air inlet groove interconnected with the second air inlet gas distribution nozzle; when the cathode guide plate is matched with another anode guide plate, the first air inlet gas distribution nozzle and the second air inlet gas distribution nozzle form a complete air inlet gas distribution nozzle, and the first air inlet groove and the second air inlet groove form a complete air inlet channel; the air inlet on the front of the cathode guide plate is set in the air inlet channel; the back of the cathode guide plate is further provided with a second head dissipation groove and a second air exhaust groove; the air outlet on the front of the cathode guide plate is interconnected with the second air exhaust groove on the back of the cathode guide plate; the main hydrogen gas inlets and the main hydrogen gas outlets of all the unit cells in the cell pack is interconnected with each other, and the main hydrogen gas inlets on all unit cells in the cell pack connected with an external hydrogen gas source via a hole set on the housing; the air inlet gas distribution nozzle on each unit cell in the cell pack is respectively interconnected with the gas flow outlet of the working gas flow distribution device; the first heat dissipation groove on the back of the anode guide plate and the second heat dissipation groove on the back of the cathode guide plate are combined into a heat dissipation channel; the second air exhaust groove on the back of the cathode guide plate and the first air exhaust groove on the back of the anode are combined into a exhaust gas channel.

The specific structure of the anode guide plate is a guide plate with double gas inlets at the two sides and gas outlet in the middle; there are two main hydrogen gas inlets set at the two sides of the anode guide plate, respectively, and there is one main hydrogen gas outlet set in the middle of the anode guide plate; hydrogen enters the main hydrogen gas inlets through the two ends of the anode guide plate, flows from the two sides towards the middle and is exhausted from the main hydrogen gas outlet in the middle; the cathode guide plate is a guide plate with gas inlet in the middle and double gas outlets at the two sides; air enters the air inlet from the air inlet channel in the middle of the cathode guide plate, flows from the middle towards the two sides and is exhausted from the exhaust gas channels at the two sides.

Another specific structure of the anode guide plate is that: the anode guide plate is provided with one main hydrogen gas inlet set on one side of the anode guide plate and there is one main hydrogen gas outlet set on the other side of the anode guide plate.

In the two specific structures of the anode guide plate, the two ends of the hydrogen guide groove on the front of the anode guide plate are provided with a first gas guide hole and a second gas guide hole; the first gas guide hole is on the back of the anode guide plate and interconnected with the main hydrogen gas inlet; the second gas guide hole is on the back of the anode guide plate and interconnected with the main hydrogen gas outlet on the back of the anode guide plate; the hydrogen guide groove is arranged longitudinally and the air guide groove is arranged transversely.

In the anode guide plate of the hydrogen fuel cell, there are one or more exhaust gas channels.

In the anode guide plate of the hydrogen fuel cell, the back of the anode guide plate and the back of the cathode guide plate are provided with a plurality of reinforcing ribs. The reinforcing ribs form a turbulator in the first heat dissipation groove and the second heat dissipation groove.

In the hydrogen fuel cell of the present invention, a plurality of fuel cell stack assemblies are encapsulated by the hard housing and are integrated together as a whole composite structure; more than two groups of stack assemblies are connected in series; the power supply plates at the head and the end of the fuel cell stack assemblies connected in series are respectively connected with two power source interfaces with opposite polarities on the housing.

When the stack assemblies are set in parallel in the inner cavity of the housing, the working gas flow distribution device further includes a gas flow distribution pipe; the gas flow distribution pipe includes a gas flow inlet and more than two gas flow distribution ports; the gas flow inlet is interconnected with the working fan; the number of the gas flow distribution ports is matched with the number of fuel cell stack assemblies in parallel.

In addition, the present invention further provides a hydrogen fuel cell system, including the hydrogen fuel cell above, a working fan and a heat dissipation fan. The working fan and the heat dissipation fan are installed on the corresponding mounts in the hydrogen fuel cell.

The hydrogen fuel cell system further includes a filtering device. The filtering device is connected with the gas inlet of the working fan and configured to filter the working gas flow entering the cell.

The filtering device includes a gas inlet, an alkaline activated carbon absorption filter and a gas outlet. The gas inlet is located below the alkaline activated carbon absorption filter element. The gas outlet is located above the alkaline activated carbon absorption filter element. The gas outlet is interconnected with the gas inlet of the working fan.

In the technical solution above, the distribution of the heat dissipation air, the distribution of the working gas flow outside the plate to the individual cells in the fuel cell stack assembly and the installation of the heat dissipation fan and the working fan are combined by an integrated gas distribution device to form a gas distribution device with comprehensive functions, thus realizing heat dissipation, and an optimized flow passage and distribution of the working gas flow and ensuring relatively high performance of the fuel cell in optimized working conditions.

The present invention applies a gas-cooling heat dissipation method, which eliminates a water management system and all components, reduces system complexity, system volume and system weight, reduces costs and improves system reliability. Since a water-cooling system is eliminated, a great deal of maintenance workload is reduced. The present invention can be applied without maintenance, and stored and started rapidly in a sub-zero environment in winter.

The encapsulating structure in the present invention is changed from a traditional plate-pull rod type into a hard housing encapsulation, which is beneficial for design and layout of the gas-cooling heat dissipation method. In addition, the hard housing-type structure with stable structure and light weight can well protect the cell pack encapsulated internally.

The working gas flow distribution device (mainly referring to an air-oxidant guide plate, i.e. a cathode guide plate) in the present invention applies an outside plate gas distribution method. Inside plate gas distribution is changed into an outside plate gas distribution non-penetrating guide plate design, which has the following advantages:
① gas distribution holes for air and water of a polar plate are eliminated. Since plate openings are reduced, stress distribution on the plate surface is improved, strength and reliability are improved and working air can be distribution from any convenient positions to the cell pack through outside plate gas distribution, which is beneficial for integral design of the cell pack.
② after the gas distribution holes are reduced, the effective polar plate working area is increased by 5% to 10%. The generation power is increased by 5% to 10% on a year-on-year basis on the condition that the total polar plate area is unchanged.

The present invention can work at low temperature, i.e. a low-temperature working mechanism, wherein
① the working temperature is 40°C to 60°C and the working gases do not need to be humidified and heated;
② the low temperature working mechanism can change the working temperature appropriately according to the external environment temperature, and the working temperature may be about 20°C to 30°C higher than the environment temperature so as to facilitate heat dissipation. The low temperature working mechanism can be adapted to a maximal environment temperature of 40°C to 50°C, and the working temperature can reach 70°C in a short period of time at the moment.
③ the low temperature working slows down the degrading and aging speed of a proton exchange membrane in a unit cell, which improves the lifetime and the stability.

The present invention can work at a normal pressure, specifically:
① generally, a hydrogen fuel cell air working pressure of 0.5kg/cm² to 2kg/cm² is called a high pressure, a working pressure of 0.5kg/cm² to 0.05kg/cm² is called a low pressure, and a working pressure below 0.05kg/cm² is called a normal pressure while the working pressure of the gas-cooled normal-pressure fuel cell provided by the present invention can reach as low as hundreds of Pascal (about 0.001kg/cm²).
② she self-power consumption of an air compressor (accounting for about 10% to 25% of the generation power) is reduced. Gas distribution of the air compressor may be replaced by only a centrifugal fan whose power consumption only accounts for about 1% of the generation power of the cell pack, which improves the generation output power and the total efficiency of the cell pack.
③ the low-pressure working pressure improves the reliability of cell sealing.
④ the present invention can apply fan air supply to replace the air compressor, which greatly reduces the costs, prolongs the lifetime, reduces the noise and generally reduces the costs and weight of the system.

The present invention further provides a method for dynamic variable humidity control of the hydrogen fuel cell so that the flow rate of the working gas flow is changed repeatedly according to a certain time interval and increment. The increment is 5% to 30% of the starting flow rate and the time interval is 1 to 30 minutes.

Through the control method, the traditional constant humidity control is changed into dynamic variable humidity control. The proton exchange membrane works under a relatively high humidity and a catalyst layer works under a medium humidity during a dynamic adjustment process by using the time difference formed by the humidity gradient and humidity change rate of water transferred between layers of the membrane electrode while the working humidity of a diffusion layer is always circulated and repeated under a relatively low humidity. Under such dynamic variable humidity control, the flow rates of the working gases are changed repeatedly according to a certain time interval and increment to increase the humidity gradient and humidity difference between the diffusion layer and the catalyst layer while discharging the reaction water, thus optimizing the working conditions of the membrane electrode. The fuel cell works stably with good performance and high efficiency to overcome the original defects.

Such control may be implemented at the hydrogen side by a hydrogen circulating system and an air working fan simultaneously, or may be also controlled by the air side separately while the hydrogen side circulates normally. Nevertheless, the gas flow variables of change periods and the time difference between change intervals of dynamic variable humidity control parameters only need to be determined and optimized through experiments according to different membrane electrode materials and membrane electrodes of different structures.

### Brief description of the drawings

Fig. 1A to Fig. IE are structural diagrams of the first embodiment of a hydrogen fuel cell power generation system of the present invention;
Fig. 2A to Fig. 2D are structural diagrams of the second embodiment of a hydrogen fuel cell power generation system of the present invention;
Fig. 3A to Fig. 3B are structural diagrams of the third embodiment of a hydrogen fuel cell power generation system of the present invention;
Fig. 4A to Fig. 4B are structural diagrams of the fourth embodiment of a hydrogen fuel cell system power generation of the present invention;
Fig. 5A to Fig. 5B are structural diagrams of the fifth embodiment of a hydrogen fuel cell system power generation of the present invention;
Fig. 6A is a sectional diagram of a housing in a hydrogen fuel cell power generation system of the present invention;
Fig. 6B to Fig. 6C are structural diagrams of a housing in a hydrogen fuel cell power generation system of the present invention;
Fig. 7 is a schematic diagram illustrating the sectional structures of two individual cells connected in series in a cell pack in a hydrogen fuel cell power generation system of the present invention;
Fig. 8A to Fig. 8B are schematic diagrams illustrating a front structure and a back structure of an anode guide plate of a unit cell in the first embodiment of a hydrogen fuel cell of the present invention;
Fig. 9A to Fig. 9B are schematic diagrams illustrating a front structure and a back structure of a cathode guide plate of a unit cell in the first embodiment of a hydrogen fuel cell of the present invention;
Fig. 10A to Fig. 10B are schematic diagrams illustrating a front structure and a back structure of a cathode guide plate of a unit cell in the second embodiment of a hydrogen fuel cell of the present invention;
Fig. 11A to Fig. 11B are schematic diagrams illustrating a front structure and a back structure of an anode guide plate of a unit cell in the second embodiment of a hydrogen fuel cell of the present invention;
Fig. 12A to Fig. 12B are schematic diagrams illustrating a front structure and a back structure of a cathode guide plate of a unit cell in the third embodiment of a hydrogen fuel cell of the present invention;
Fig. 13 is a schematic diagram illustrating a back structure of a cathode guide plate of a unit cell in the fourth embodiment of a hydrogen fuel cell of the present invention;
Fig. 14A to Fig. 14B are schematic diagrams illustrating a front structure and a back structure of a cathode guide plate of a unit cell in the fifth embodiment of a hydrogen fuel cell of the present invention;
Fig. 15 is a schematic diagram illustrating a back structure of a cathode guide plate of a unit cell in the sixth embodiment of a hydrogen fuel cell of the present invention;
Fig. 16 is a schematic diagram illustrating principles of a membrane electrode of the present invention;
Fig. 17 is a diagram illustrating humidity relations of each layer of an existing membrane electrode when static constant humidity control is applied;
Fig. 18 is a diagram illustrating humidity relations of each layer of a membrane electrode when the dynamic humidity control method of the present invention is applied; and
Fig. 19 is a structural diagram of a filtering device in the hydrogen fuel cell system of the present invention.

### Detailed description of the invention

The present invention provides a gas-cooled hydrogen fuel cell which works at normal pressure, applies a hard housing encapsulating structure, an integrated outside plate gas distribution structure, an outside plate gas distribution non-penetrating cathode guide plate, a two-side double-air intake inverse process and a middle single-hole gas exhaust-type anode plate. A dynamic humidity control method is applied, i.e. the working voltage of a working fan is controlled to control the flow rate of the working gas flow.

The present invention applies air-cooling heat dissipation to replace conventional water-cooling heat dissipation, thus eliminating a water management system and various components thereof, reducing system complexity, volume and weight, reduces costs and improves system reliability. Since the water-cooling system is eliminated, a great deal of maintenance workload is reduced. The present invention can be applied without maintenance, and stored and started rapidly in a sub-zero environment in winter.

The present invention optimizes distribution of heat dissipation air, distribution of working gas flows outside the plate to individual cells in a fuel cell stack assembly and installation of a heat dissipation fan and a working fan, thus realizing heat dissipation, optimized flow passages and distribution of the working gas flows and ensuring relatively high performance of the fuel cell in optimized working conditions.

The present invention will be described in details through specific embodiments below.

### Integrated outside plate gas distribution device

The present invention combines distribution of heat dissipation air, distribution of the working gas flow outside a plate to a unit cell in a fuel cell stack assembly and installation of a heat dissipation fan and a working fan are combined by an integrated gas distribution device to form a gas distribution device with comprehensive functions and having the following structures:
Embodiment 1: single-side gas distribution, i.e. both a heat dissipation gas distribution device and a working gas flow distribution device are located on the top plate of a housing.

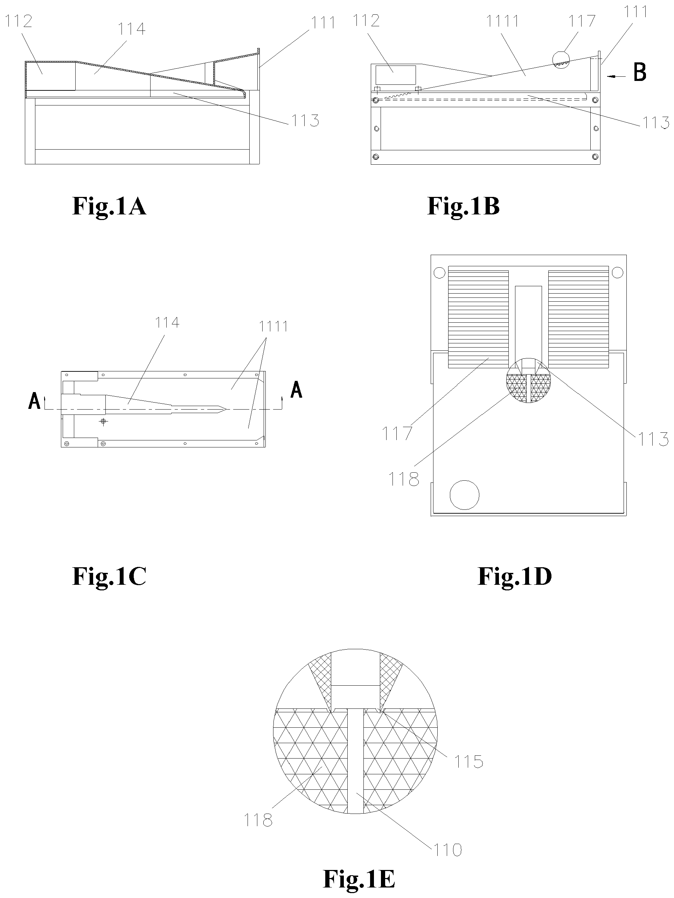

Fig. 1A to Fig. IE are structural diagrams of the first embodiment of a hydrogen fuel cell of the present invention. In the present embodiment, the hydrogen fuel cell applies a single-side gas distribution method to distribute heat dissipation air and working gas flow.
Fig. 1C is a top view of the present embodiment. Fig. 1A and Fig. 1B are respectively front and back views of Fig. 1C sectioned from AA. Fig. 1D is a B-direction view of Fig. 1B. Fig. IE is a sectional drawing of partial enlargement of Fig. 1B. The hydrogen fuel cell in the present embodiment includes a fuel cell stack assembly and an outside plate gas distribution device, wherein the fuel cell stack assembly is encapsulated with a hard housing. The structure of the fuel cell stack assembly and the hard housing will be described specifically in embodiments hereinafter.

The outside plate gas distribution device is fixed on the hard housing and the outside plate gas distribution device includes a working gas flow distribution device and a heat dissipation gas distribution device.

The working gas flow distribution device includes a gas distribution manifold 114, a gas distribution groove 113 and a gas flow outlet 115; the gas distribution manifold 114 is located outside the housing and fixed on the top plate of the housing; the gas distribution manifold 114 is interconnected with the gas distribution groove 113; the gas distribution groove 113 extends into the inner cavity of the housing; a gas flow outlet 115 is formed at the bottom of the gas distribution groove 113; the gas flow outlet 115 is interconnected with the air inlet gas distribution nozzle of a cathode guide plate 118 of each unit cell in the hydrogen fuel cell pack; the air inlet gas distribution nozzle is interconnected with an air inlet channel 110. One end of the gas distribution manifold 114 is an open end; the open end is provided with the working fan mount 112 for connected with a working fan. The gas distribution manifold 114 is lowered gradually towards the other end from the open end. The working fan mount 112 and the heat dissipation fan mount 111 are set on two opposite ends of the top plate, respectively; in addition, the gas distribution manifold 114 is lowered gradually from one end where the fan mount 112 locates towards the other end.

The heat dissipation gas distribution device system includes a heat dissipation channel 1111 set outside the housing and interconnected with the inner cavity of the housing, and a heat dissipation port (not shown in the figures) set on the housing. One end of the heat dissipation channel 1111 is an open end; the open end is provided with a heat dissipation fan mount 111; the heat dissipation channel 1111 is lowered gradually from the open end towards the other end and fixed and covered on the top plate of the housing; in the present embodiment, the working fan mount 112 and the heat dissipation fan mount 111 are located on the open ends of their respective pipes; of course, they may be also located on any positions of the pipes, and the specific positions are determined according to mounting conditions etc.

The heat dissipation fan blows air into the inner cavity of the housing or pumps air out of the inner cavity of the housing through the heat dissipation channel 1111 to cool the hydrogen fuel cell pack; heat dissipation air obtained after heat dissipation of the hydrogen fuel cell pack is exhausted or enters via the heat dissipation outlet on the housing.

In addition, the heat dissipation channel 1111 is provided with a gas flow diversion damping groove 117; heat dissipation gas flow generates a downward deflection speed in the damping groove so that the heat dissipation gas flow flows to the heat dissipation channel of the cell pack more uniformly.

Embodiment 2: double-side gas distribution, i.e. the working gas flow distribution device is set on the top plate of the housing and the heat dissipation channel of the heat dissipation gas distribution device is set on the bottom plate of the housing.

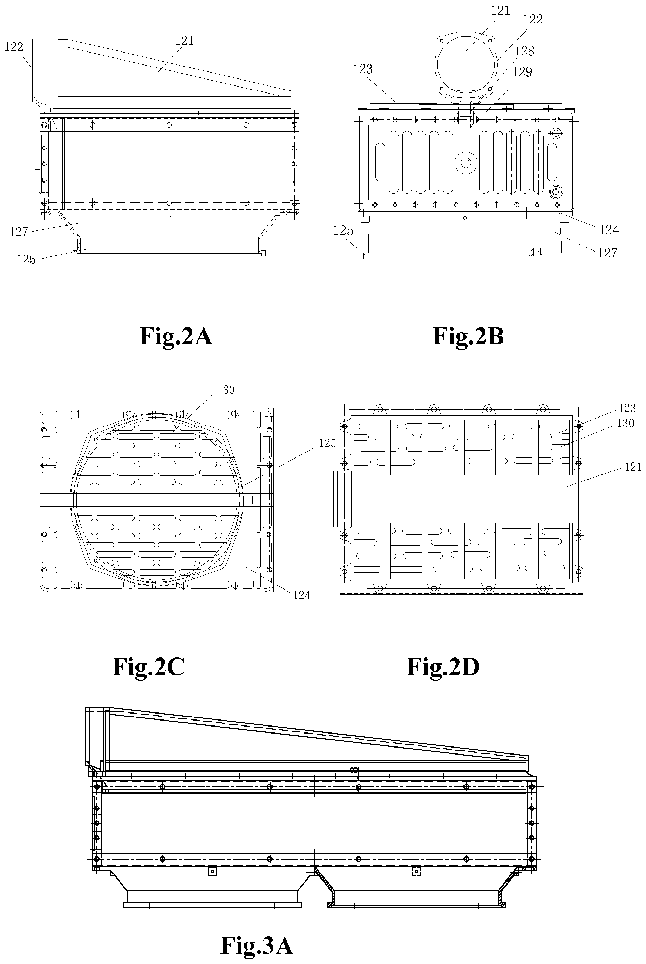

Fig. 2A to Fig. 2D are structural diagrams of the second embodiment of a hydrogen fuel cell power generation system of the present invention. What is different from the first embodiment is that a heat dissipation fan with its mount and the working gas flow distribution device are set on the upper plate and the lower plate opposite to each other, i.e. the top plate and the bottom plate of the housing of the hydrogen fuel cell, respectively.

As shown in Fig. 2A to Fig. 2D, in the present embodiment, the top plate 123 is provided with a gas distribution manifold 121. The gas distribution manifold 121 is connected with a working fan (not shown in the figures) through a working fan mount 122; the gas distribution manifold 121 is interconnected with a gas distribution groove 128. The gas distribution groove 128 extends into the inner cavity of the housing. A gas flow outlet 129 is formed at the bottom of the gas distribution groove 128. The gas flow outlet is interconnected with the air inlet gas distribution nozzle (not shown in the figures) of each unit cell in the cell pack. The bottom plate 124 is provided with a heat dissipation air collection chamber 127. A plurality of heat dissipation ports 130 are provided on the top plate 123 of the housing. The heat dissipation air collection chamber 127 is interconnected with the inner cavity of the housing and interconnected with the heat dissipation fan (not shown in the figures) through the heat dissipation fan mount 125. The heat dissipation fan may pumps air out of the heat dissipation air collection chamber 127 to perform heat dissipation by applying an axial flow fan or a centrifugal fan so as to dissipate heat in the heat dissipation channel (not shown in the figures) of the hydrogen fuel cell pack in the housing to cool the cell pack.

When the heat dissipation fan pumps air, air outside the housing enters the housing from the heat dissipation ports 130 on the top plate 123, passes through the heat dissipation channel of the cell pack and then hot air is exhausted by the heat dissipation fan from the heat dissipation air collection chamber 127. Heat dissipation air may be also blew into the hydrogen fuel cell pack from the bottom plate 124 by the heat dissipation fan through the heat dissipation air collection chamber 127, and exhausted from the heat dissipation ports 130 of the top plate 123 via the heat dissipation channel (not shown in the figures) of the hydrogen fuel cell pack so as to realize heat dissipation effect.

### Composite structure

In the present invention, when there is a plurality of fuel cell stack assemblies encapsulated by the hard housing, the fuel cell stack assemblies may be combined into an integrated composite structure. When single-side gas distribution is applied, the length of the cell pack and the length of the hard housing may be extended randomly according to the required power and voltage. When double-side gas distribution is applied, a cell pack and a heat dissipation fan form a unit module. Fuel cell stacks which are twice as many as those on one unit module are installed by a hard housing which is twice as long as that of one unit module on double modules. The working gas flow distribution device of the double modules above is twice as long as that on one unit module while a heat dissipation gas distribution device below is mounted with two heat dissipation fans. Other multi-module structures are arranged in the same manner by taking the following embodiments for example:

### Embodiment 3

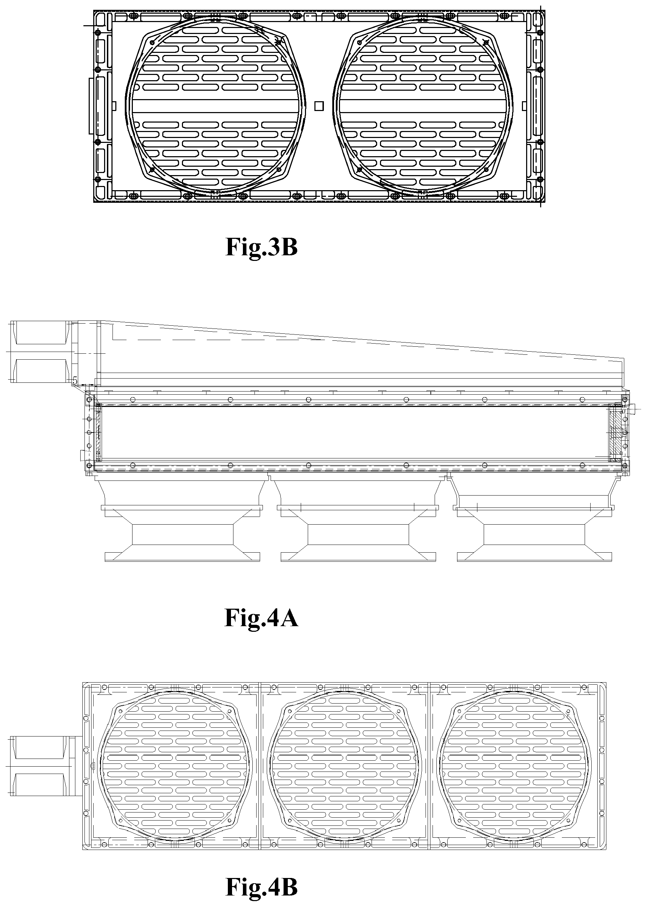

Fig. 3A to Fig. 3B are structural diagrams of the third embodiment of a hydrogen fuel cell of the present invention. As shown in Fig. 3, two unit modules are included. Cell packs in two unit modules are connected in series, and power source interfaces are introduced from the two ends of a housing. Two heat dissipation air collection chambers are connected with two heat dissipation fans via two mounts, respectively. The working principles of the third embodiment are the same as those in the second embodiment, which will not be repeated here.

### Embodiment 4

Fig. 4A to Fig. 4B are structural diagrams of the fourth embodiment of a hydrogen fuel cell of the present invention. As shown in Fig. 4A to Fig. 4B, the present embodiment includes three unit modules.

### Embodiment 5

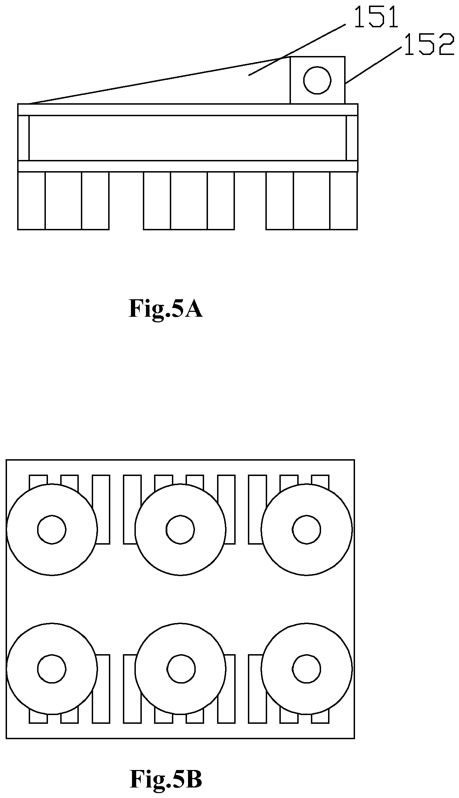

Fig. 5A to Fig. 5B are structural diagrams of the fifth embodiment of a hydrogen fuel cell power generation system of the present invention. In the third embodiment and the fourth embodiment, it only needs to lengthen the gas distribution device when two unit modules are connected in series. While there are six unit modules in the fifth embodiment as shown in Fig. 5A to Fig. 5B, wherein two rows of unit modules are set in parallel in the housing. Cell packs in each unit module are connected in series and power supply plates on the front and back ends of the cell packs are connected with two power source interfaces with opposite polarities on a gland of the housing via a conducting medium, respectively.

In the present embodiment, besides the gas distribution manifold 151, the working fan mount 152, the gas distribution groove and the gas flow outlet, the working gas flow distribution device further includes a gas flow distribution pipe (not shown in the figures), i.e. inputted gas flow is divided by an outside plate gas distribution manifold into two groups to distribute working gas flows to individual cells in the cell packs in the two rows of unit modules. The gas flow distribution pipe includes a gas flow inlet and a plurality of gas flow distribution ports. The number of the gas flow distribution ports is matched with the number of rows of the fuel cell stack assemblies. As shown in the figures. There are two gas flow distribution ports if there are two rows of fuel cell stack assemblies. There are N gas flow distribution ports if there are N rows of fuel cell stack assemblies.

Hard housing: the cell encapsulating structure in the present invention is changed from a traditional end-plate pull rod type into a hard housing type.

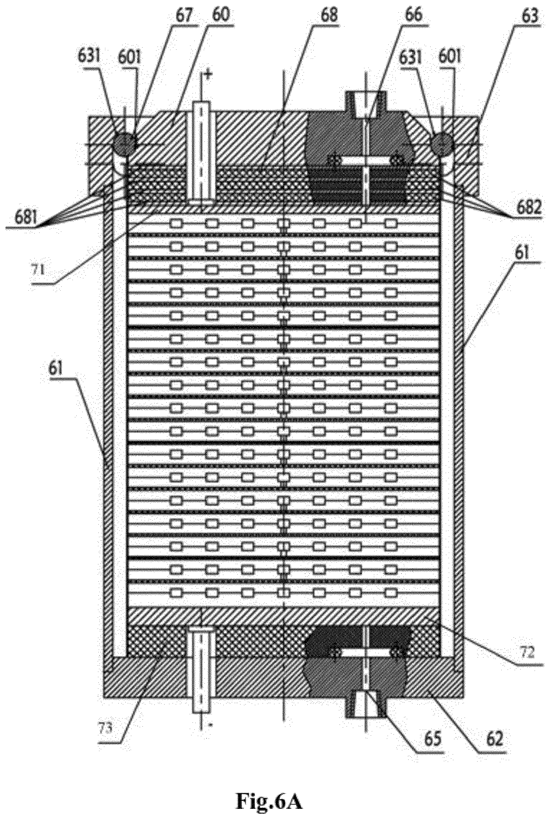

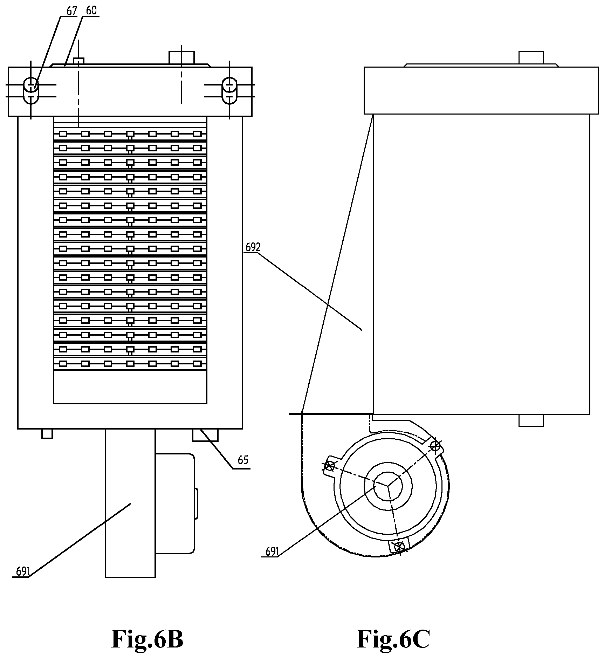

In the embodiments above, the specific structure of the housing of the hydrogen fuel cell may apply the structures as shown in Fig. 6A to Fig. 6C. In the embodiment above, the housing structures as shown in Fig. 6A and Fig. 6C are used by toppled. After toppling, a removed plate facing the paper surface is the top plate or bottom plate, and the opposite face is the bottom plate or top plate. Combining the embodiments above, the housing includes a gland 60, two concave-shaped plates 61, a top plate (a plate provided with a gas distribution manifold 692), a bottom plate (a plate opposite to the top plate), a side plate 62 and a flange plate 63; the two concave-shaped plates 61 are set oppositely, one end of a concave-shaped plate is fixedly connected with the side plate 62 and the other end is fixed with the gland 60 through the flange plate 63; power source interfaces of two kinds of polarities are set on the gland and the side plate, respectively; a fuel gas inlet 66 and a fuel gas outlet 65 are set on the gland 60 and the side plate 62, respectively.

The two sides of the upper edge of the gland 60 are provided with an arc-shaped locking face 601 concave downwards; the portion on the flange plate 63 opposite to the arc-shaped locking face 601 is provided with an arc-shaped locking face 631 concave upwards; when the gland 60 is pressed into the flange plate 63 by an external pressure, a space is enclosed by the arc-shaped locking face 601 concave downwards and the arc-shaped locking face 631 concave upwards, and an encapsulating pin 67 or a bolt is provided in the space.

Since the flange plate 63 and the gland 60 are structured more precisely, relatively complicated and relatively high machining requirements, a simple encapsulating method may be applied, i.e. the gland 60 is fixed on the flange plate 63 directly by the bolt.

A pressure compensator 68 is provided between the gland 60 and a power supply plate in the inner cavity of the housing, and pressure compensator 68 is composed of metal plates 681 and elastic bodies 682 laminated in a staggered manner.

If an insulating plate is further provided between the gland 60 and the power supply plate, the pressure compensator may be also provided between the insulating plate and the gland 60.

A working fan 691 distributes gas to a stack in the housing via the gas distribution manifold 692.

### Unit cell structure

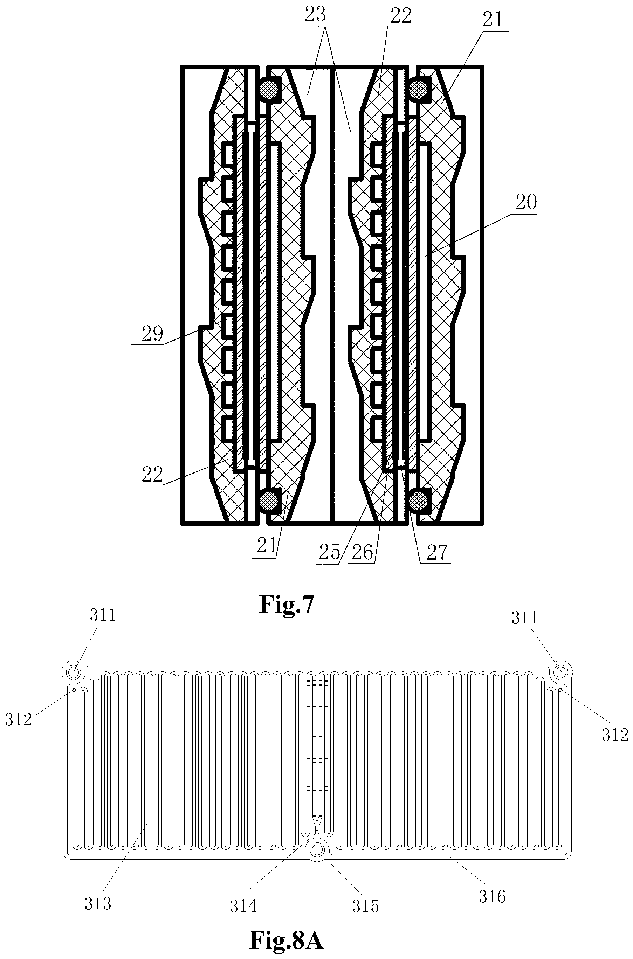

Fig. 7 is a schematic diagram illustrating the sectional structures of two individual cells connected in series in a cell pack in a hydrogen fuel cell of the present invention. As shown in Fig. 7, the hydrogen fuel cell pack is composed of a plurality of individual cells connected in series. The unit cell includes an anode guide plate 21, a membrane electrode and a cathode guide plate 22; the membrane electrode includes two catalyst layers 25, two conductive diffusion layers (carbon paper) 26 and a proton membrane 27. The front of the anode guide plate 21 and the front of the cathode guide plate 22 are adjacent to two side surfaces of the membrane electrode, respectively; the back of the anode guide plate 21 is adjacent to the cathode guide plate 22 (not shown in the figure) of another unit cell; both the back of the anode guide plate and the back of the cathode guide plate are provided with a heat dissipation groove, and the heat dissipation grooves are combined to form a heat dissipation channel 23; the heat dissipation channel 23 is configured to dissipate heat for the individual cells; the heat dissipation channel 23 is an internal heat dissipation channel in a fuel cell stack assembly. The heat dissipation channel 23 is interconnected with the heat dissipation channel 1111 located outside the housing in Fig. 1B to form a complete heat dissipation channel. When working, an air guide groove 29 guides air into the cathode guide plate, hydrogen is infused into the anode guide plate 21 via a hydrogen guide groove 20 and electric energy is generated through the membrane electrode. The working principles of the membrane electrode will be explained specifically hereinafter and will not be repeated here.

### About the structures of the guide plates:

### Embodiment 1

Fig. 8A to Fig. 8B are schematic diagrams illustrating a front structure and a back structure of an anode guide plate of a unit cell in the first embodiment of a hydrogen fuel cell of the present invention. As shown in Fig. 8A, the anode guide plate is provided with a main hydrogen gas inlet 311, a main hydrogen gas outlet 315, and a hydrogen guide groove 313 of the anode guide plate; the two ends of the hydrogen guide groove are provided with a first gas guide hole 312 and a second gas guide hole 314; the hydrogen guide groove 313 is arranged longitudinally; and a sealing ring 316 is provided around the anode guide plate.

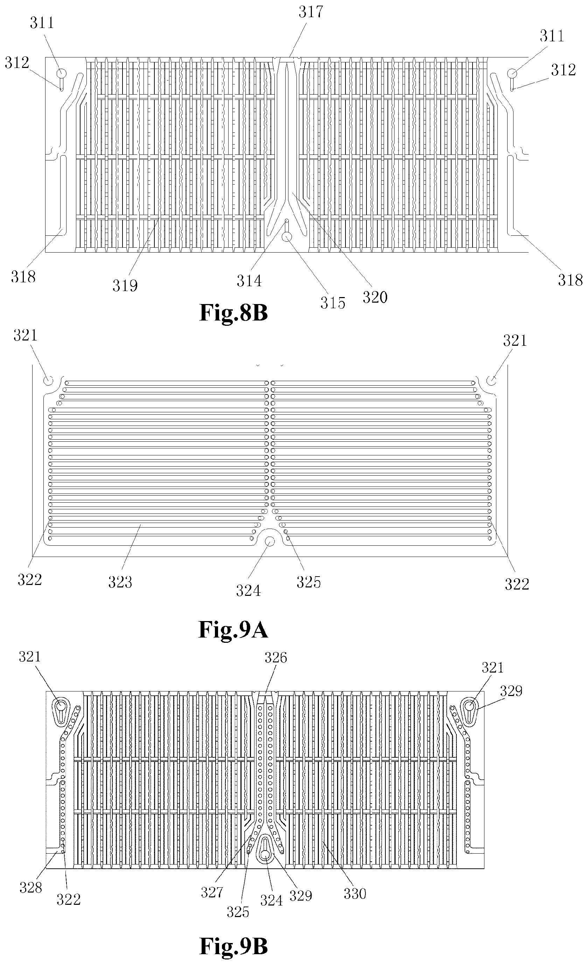

As shown in Fig. 8B, the back of the anode guide plate is provided with a first air inlet gas distribution nozzle 317 and a first air inlet groove 320 interconnected with the first air inlet gas distribution nozzle 317; the back of the anode guide plate is further provided with a first heat dissipation groove 319 and a first air exhaust groove 318.

As shown in Fig. 8A in combination with Fig. 8B, the first gas guide hole 312 on the back of the anode guide plate is interconnected with the main hydrogen gas inlet 311; the second gas guide hole 314 on back of the anode guide plate is interconnected with the main hydrogen gas outlet 315; hydrogen is connected to the main hydrogen gas inlet 311 from an external pipe etc., enters the back of the guide plate, enters the hydrogen guide groove 313 on the front of the guide plate from the back of the guide plate via the first gas guide hole 312, enters the back of the guide plate from the second gas guide hole 314, and is then exhausted by a pipeline from the main hydrogen gas outlet 315 on the back of the guide plate.

Fig. 9A to Fig. 9B are schematic diagrams illustrating a front structure and a back structure of a cathode guide plate of a unit cell in the first embodiment of a hydrogen fuel cell of the present invention. As shown in Fig. 9A, the cathode guide plate is provided with a main hydrogen gas inlet 321 and a main hydrogen gas outlet 324. The front of the cathode guide plate is provided with an air inlet 325, an air outlet 322, and an air guide groove 323. The air guide groove 323 is arranged transversely.

As shown in Fig. 9B, the back of the cathode guide plate is provided with a second air exhaust groove 328; the second air exhaust groove 328 is provided with the air outlet 322. Additionally, sealing rings 329 are provided at the main hydrogen gas inlet and the main hydrogen gas outlet. The back of the cathode guide plate is provided with a second air inlet gas distribution nozzle 326 and a second air inlet groove 327 interconnected with the second air inlet gas distribution nozzle 326; the air inlet 325 is set in the second air inlet groove 327.

When the back of the cathode guide plate is matched with the back of the anode guide plate, the first air inlet groove 320 on the back of the anode guide plate is combined with the second air inlet groove 327 on the back of the cathode guide plate to form a complete air inlet channel. The first air inlet gas distribution nozzle 317 is combined with the second air inlet gas distribution nozzle 326 to form a complete air inlet gas distribution nozzle used for connecting with the gas flow outlet of the working gas flow distribution device.

The second air inlet groove 327 of the cathode guide plate is provided with a plurality of air inlets 325 interconnected with the front of the cathode guide plate. The air outlet 322 on the front of the cathode guide plate is interconnected with the first air exhaust groove 318 on the back of the cathode guide plate. The main hydrogen gas inlet 321 of the cathode guide plate and the main hydrogen gas inlet 311 of the anode guide plate on each unit cell in the cell pack are interconnected with each other. The main hydrogen gas outlet 324 of the cathode guide plate and the main hydrogen gas outlet 314 of the anode guide plate on each unit cell are interconnected with each other and connected with a hydrogen gas source outside the system via a hole on the housing.

The back of the cathode guide plate is further provided with a second heat dissipation groove 330. Turbulators are provided in the second heat dissipation groove 330 and the first heat dissipation groove 319 on the back of the anode guide plate, and two heat dissipation grooves can be combined into a heat dissipation channel.

As described above, the second air exhaust groove 328 on the back of the anode guide plate and the first air exhaust groove 318 on the front of the anode guide plate are combined into an exhaust gas channel. There may be one or more exhaust gas channels. Correspondingly, one or more outlets are provided on the housing.

In the structure above, hydrogen flows from the two ends of a guide plate towards the middle to form a guide plate with double gas inlets at two sides and gas outlet in the middle while air flows from the middle to the two ends to form a gas distribution method of an inverse process with gas inlet in the middle and double gas outlets at two sides.

Additionally, the back of the anode guide plate and the back of the cathode guide plate are provided with a plurality of reinforcing ribs used for improving the guide plate strength. As a preferred embodiment, the structures and shapes of the reinforcing ribs in the heat dissipation channel are designed so that the reinforcing ribs form a turbulator in the heat dissipation channel to enhance the heat dissipation effect.

### Embodiment 2

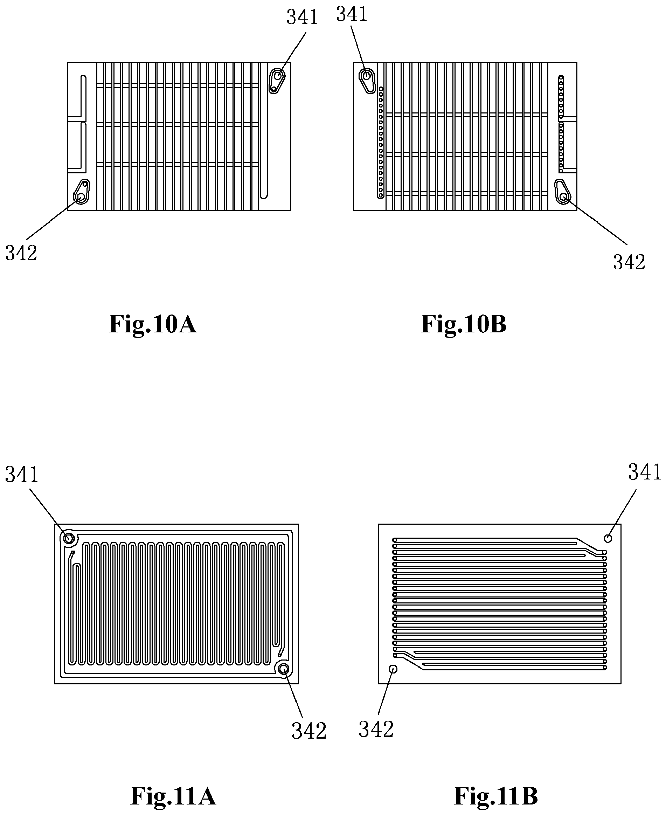

Fig. 10A to Fig. 10B are schematic diagrams illustrating back structures of an anode guide plate and a cathode guide plate of a unit cell in the second embodiment of a hydrogen fuel cell of the present invention. Fig. 11A to Fig. 11B are schematic diagrams illustrating front structures of an anode guide plate and a cathode guide plate of a unit cell in the second embodiment of a hydrogen fuel cell of the present invention. As shown in Fig. 10A to Fig. 11B, what is different from the first embodiments is that the anode guide plate is provided with one main hydrogen gas inlet 341 set at one side of the anode guide plate, and the anode guide plate is also provided with one main hydrogen gas outlet 342 set at the other side of the anode guide plate. The working principles of the second embodiment are the same as those of the first embodiment and will not be repeated here. A polar plate with such a structure is mainly applied to a compound fuel cell stack.

### Embodiment 3

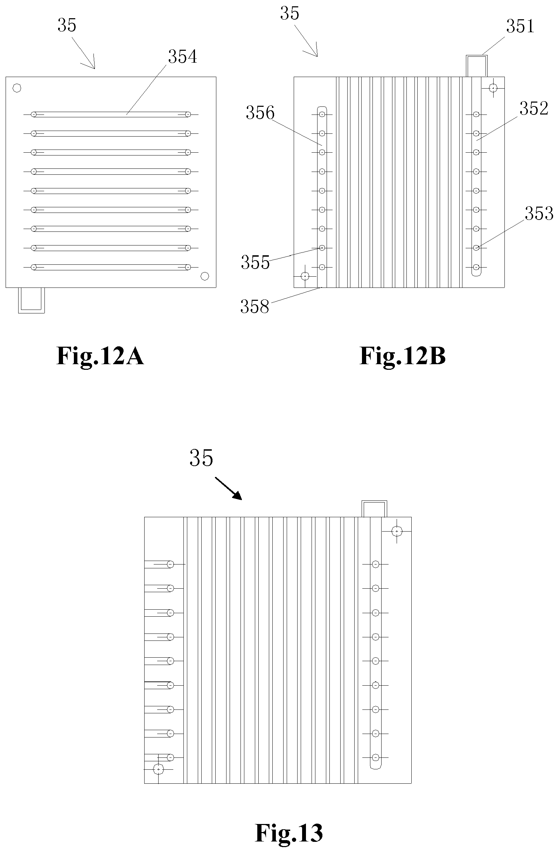

Fig. 12A to Fig. 12B are schematic diagrams illustrating a front structure and a back structure of a cathode guide plate of a unit cell in the third embodiment of a hydrogen fuel cell of the present invention. As shown in Fig. 12A to Fig. 12B, the present embodiment applies a kind of outside plate gas distribution non-penetrating cathode guide plate. The polar plate is a structure with gas intake at one side and gas collection and exhaust at the other side. A gas distribution pipe 351 is mounted and sealed out of the polar plate 35 and functions as a gas distribution nozzle interconnected with the gas flow inlet of the gas distribution device. Air is inputted from the gas distribution pipe 351 into an air inlet groove 352 in the back of the polar plate 35, and transmitted from an air inlet 353 to an air guide groove 354 sealed on the front of the polar plate 35, and flows from one end of the air inlet 353 to one end of an air outlet 355. Hereby, after participating in oxidation and power generation, the air enters from the air outlet 355 at the other end into a second gas exhaust groove 356, and is exhausted together with the steam generated by the reaction from a gas outlet 358. The working principles of the third embodiment are the same as those of the first embodiment and will not be repeated here.

### Embodiment 4

As shown in Fig. 13 which is a schematic diagram illustrating a back structure of a cathode guide plate in the fourth embodiment, and the front structure of the cathode guide plate has the same structure as that of the third embodiment and will not be repeated here. In the present embodiment, each air outlet is interconnected with a gas exhaust groove on the back of the cathode guide plate of the unit cell. In other words, compared with the third embodiment in which one gas exhaust groove is provided, a plurality of gas exhaust grooves are provided in the fourth embodiment.

### Embodiment 5

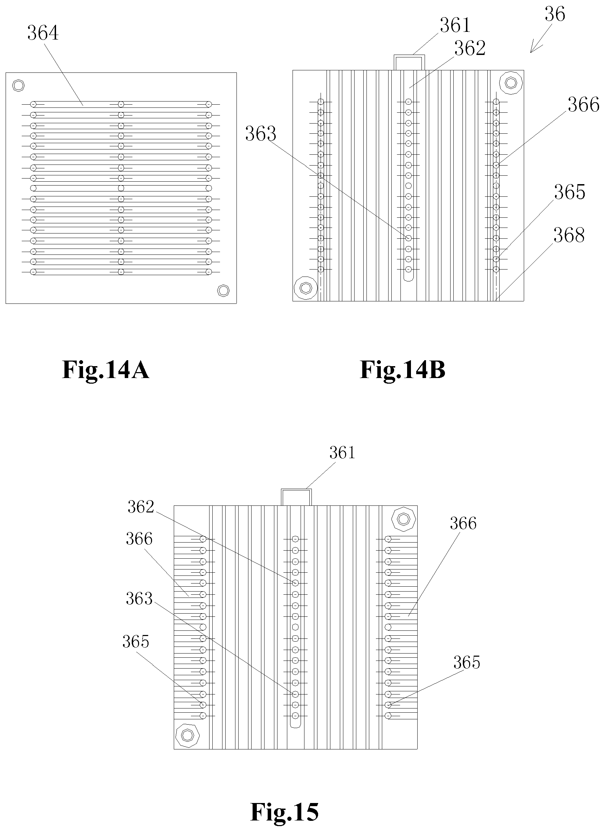

Fig. 14A to Fig. 14B are schematic diagrams illustrating a front structure and a back structure of a cathode guide plate of a unit cell in the fifth embodiment of a hydrogen fuel cell of the present invention. As shown in Fig. 14A to Fig. 14B, the present embodiment applies a mechanism with gas intake in the middle and gas collection and exhaust at two sides. In the present embodiment, an outside plate gas distribution pipe 361 is interconnected with an air inlet groove 362. An air inlet 363 is set in the air inlet groove 362 while an air outlet 365, a gas exhaust groove 366 and a gas outlet are set on two sides of a polar plate 36, respectively. On the front of the polar plate, an air guide groove 364 is provided between the air inlet 363 and the air outlet 365. Air enters the outside plate gas distribution pipe 361 from the gas flow outlet of the gas distribution device, flows from the air inlet 363 in the air inlet groove 362 into the air guide groove 364 on the front, flows from one end of the air inlet 363 into one end of the air outlet 365, flows from the air outlet 365 into the gas exhaust groove 366 on the back and is collected and exhausted from the gas exhaust groove 366.

In the present embodiment, there are two rows of gas exhaust grooves and gas outlets. The working principles of the present embodiment are the same as those of the first embodiment and will not be repeated here.

### Embodiment 6

As shown in Fig. 15 which is a schematic diagram illustrating a back structure of a cathode guide plate in the sixth embodiment, the front structure of the cathode guide plate has the same structure as that of the fifth embodiment and will not be repeated here. In the present embodiment, on the back of the cathode guide plate of the unit cell, each air outlet 365 is interconnected with a gas exhaust groove 366. In other words, compared with the fifth embodiment, a longitudinal gas exhaust groove is provided at two sides of a polar plate respectively in the fifth embodiment while the two sides of the polar plate are provided with a plurality of transverse gas exhaust grooves in the sixth embodiment.

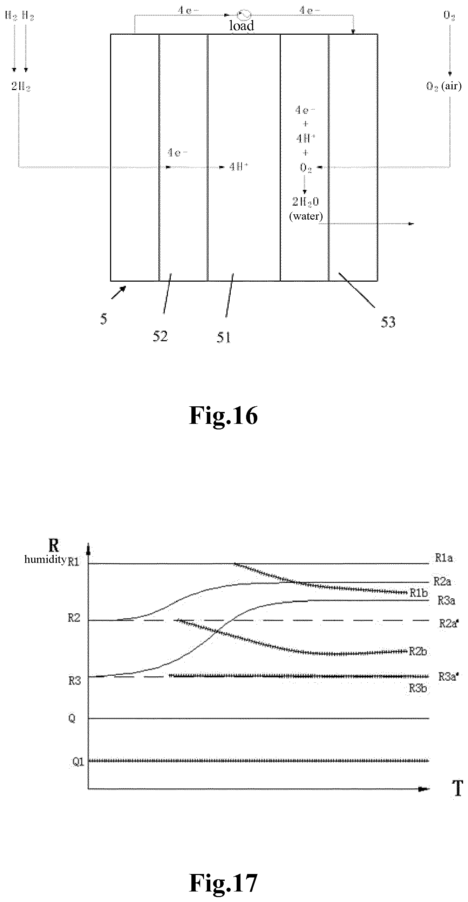

The present embodiment further provides a method for dynamic variable humidity control of a hydrogen fuel cell power generation system. Please first refer to Fig. 16 which is a schematic diagram illustrating principles of a membrane electrode. As shown in Fig. 16, the membrane electrode 5 is composed of a proton membrane 51, two catalyst layers 52 and two diffusion layers 53. The proton membrane 51, which can conduct hydrogen ions (protons) instead of being electrically conductive, separates a hydrogen gas and an oxygen gas at two sides of the proton membrane to prevent mutual permeation. The catalyst layers 52 are adhered at two sides of the proton membrane 51. The catalyst layer 52 at the hydrogen side is an anode catalyst layer. Hydrogen atoms are electrolyzed into two parts consisting of hydrogen ions and free electrons by the anode. Since the proton membrane 51 can conduct ions, the hydrogen ions (protons) are conducted to an air side of the cathode by the proton membrane 51 while the electrons are transmitted by an external circuit through the diffusion layers (carbon paper) 53 to the cathode to generate electric energy. At the same time, water is generated by oxygen and the hydrogen protons transmitted by the proton membrane 51.

Secondly, please refer to Fig. 17 which is diagram illustrating humidity relations of each layer when an existing membrane electrode when static constant humidity control is applied. As shown in Fig. 17 and referring to Fig. 16, the higher the humidity of the proton membrane 51 is, the smaller the hydrogen ion conduction resistance of the proton membrane will be. Therefore, the traditional fuel cell constant-humidity temperature control mode has to always work in a relatively high humidity as much as possible (as shown in Fig. 17) in order to reduce internal resistance and improve power generation capacity. Besides catalyzing and conducting ions, the catalyst layers 52 should be further able to make gases diffuse and flow. Diffusing needs relatively high humidity while flowing needs relatively low humidity. Otherwise, gas diffusion will be influenced as soon as a diffusion channel is occupied with water to reduce the power generation capacity. Thus the catalyst layers 52 are required to meet the requirements of two aspects to maintain a balanced medium humidity while the diffusion layers (carbon paper) do not need a high humidity condition to conduct electrons and diffuse gases. Instead, drier diffusion layers are preferred. These three different conditions can be hardly satisfied at the same time in constant humidity control. In order to ensure operation of the membrane electrode 5, the membrane electrode has to run in a relatively high humidity, thus the defects above can be hardly overcome and power can be hardly generated in optimized conditions.

As shown in Fig. 17, R1 is a relatively optimized humidity of the proton membrane; R2 is a relatively optimized humidity of a catalyst layer; R3 is a relatively optimized humidity of a diffusion layer; and Q is an optimized flow rate of reaction air. When the flow rate of the reaction air is small, the gas flow humidity is high. The gas flow humidity is low when the flow rate of the reaction air is large.

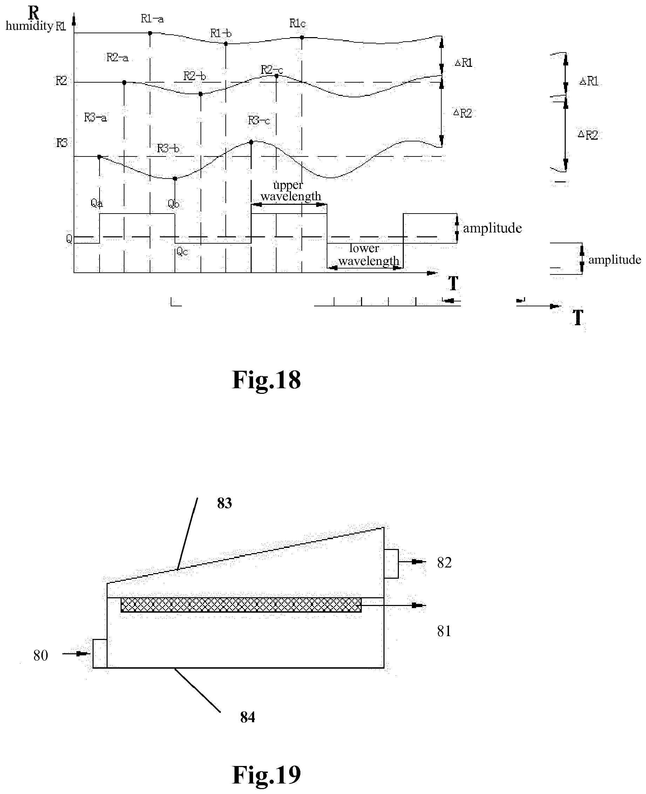

The method for dynamic variable humidity control of the present invention can realize dynamic variable humidity control. The voltage of a working fan is controlled to change the flow rate of the working gas flow so that the flow rate of the working gas is changed repeatedly according to a certain time interval and increment, as shown by the last curve Q in Fig. 18.

Fig. 18 is a diagram illustrating humidity relations of each layer of a membrane electrode when the dynamic variable humidity control method of the present invention is applied. In Fig. 18, R1 is a relatively optimized humidity of the proton membrane; R2 is a relatively optimized humidity of a catalyst layer; R3 is a relatively optimized humidity of a diffusion layer; and Q is an optimized flow rate of reaction air. As shown in Fig. 18 and referring to Fig. 16, by using the time difference formed by the humidity gradient and humidity change rate of water transferred between the layers, the dynamic variable humidity control changes parameters of a fan controller first so that the revolving speed of the fan is increased to increase the flow rate of the working gas flow Q to Qa, change and reduce the humidity of the diffusion layers (carbon paper) 53 from R3-a to R3-b so as to change the humidity of the catalyst layers 52 and reduce the humidity from R2-a to R2-b. When the humidity change of the catalyst layers 52 begins to influence the humidity change of the proton membrane 51 and reduce the humidity from R1-a to R1- b, the revolving speed of the fan is controlled and the flow rate of the working gas flow is changed so that the flow rate is reduced from Qb to Qc, the humidity of the diffusion layers (carbon paper) 53 stops decreasing and is increased to R3-c gradually, and the humidity of the catalyst layers 52 stops decreasing and is also increased to R2-c gradually. Similarly, the increase of the humidity to R2-c also stops the humidity from decreasing to R1-b and increases the humidity to R1-c so that the proton membrane 51 works in a relatively high humidity and the catalyst layers 52 works under a medium humidity during a dynamic adjustment process while the working humidity of the diffusion layers (carbon paper) 53 is always circulated and repeated in a relatively low humidity.

In this way, under such dynamic variable humidity control, the flow rate of the working gas is changed repeatedly according to a certain time interval and increment, thus increasing the humidity gradient and the humidity difference ΔR1 and ΔR2 of the diffusion layers (carbon paper) 53 and the catalyst layers 52 and optimizing the working conditions of the membrane electrode 5 while discharging the reaction water. Wherein such control can be realized by a hydrogen circulating system at the hydrogen side and an air working fan at the same time, or may be controlled separately by the air side. Additionally, the gas flow variables (change amplitude of reaction air optimized flow rate Q) of the change period of the dynamic variable humidity control parameters may change between 5% and 30% of the total quantity Q in a time period from Qa to Qb, i.e. the time difference of the change intervals is 1 to 30 minutes. However, since different membrane electrode materials and membrane electrodes of different structure are very different, the specific values of two kinds of parameters above need to be determined and optimized in the range determined above through experiments for a membrane electrode of a determined material and structure.

Wherein the total quantity Q is the minimum flow rate value of a membrane electrode optimized theoretical value.

In addition, the present invention further discloses a hydrogen fuel cell system. The system includes the hydrogen fuel cell of the embodiments above, the working fan and the heat dissipation fan. The working fan and the heat dissipation fan are installed on the mounts in the hydrogen fuel cell.

To solve the problem that when working in an urban environment, harmful gases (SO₂, HS, HCX, HNX) may enter the cathode of the fuel cell with working gases to cause significant problems including catalyst poisoning and reduction of cell performance, the present invention adds a filtering device to the hydrogen fuel cell system. As shown in Fig. 19, the filtering device includes a gas inlet 18, an alkaline activated carbon absorption filter 81 and a gas outlet 82. The gas inlet 80 is located below the alkaline activated carbon absorption filter 81. The gas inlet 82 is located above the alkaline activated carbon absorption filter 81. The gas inlet 82 is interconnected with the gas inlet of the working fan. The device is similar to an intake filter of an internal combustion engine vehicle. A dust filtering layer between an upper lid 83 and a lower lid 84 of the intake filter is replaced by an alkaline activated carbon absorption filter filled with specially developed alkaline activated carbon absorption grains for absorbing harmful acid gases including SO₂, H₂S etc. The filtering layer can absorb harmful gases when the working gas flow enters the filtering device, passes through the filter before the working gas flow enters and works in the cell, thus ensuring normal operation of the fuel cell in a polluted environment.

Through the absorption filter 81, a harmful gas concentration of 1 to 5 PPM can be purified to below 0.005 PPM.

Finally, it should be noted that, the foregoing embodiments are merely used for illustrating, but not for limiting the present invention. Though the present invention has been described in details with reference to the preferred embodiments, those of ordinary skill in the art should understand that, modifications or equivalent replacements made to the present invention without departing from the principle and range of the present invention should be included in the scope of the claims of the present invention.

## Claims

1. A hydrogen fuel cell, comprising a fuel cell stack assembly and an outside plate gas distribution device;
the fuel cell stack assembly comprises a first insulating plate, a first power supply plate (71), a cell pack, a second power supply plate (72) and a second insulating plate (73) set in series; the first power supply plate (71) and the second power supply plate (72) function as the anode output and the cathode output of the cell pack, respectively;
the fuel cell stack assembly is encapsulated with a hard housing;
**characterised in that** the outside plate gas distribution device is fixed on the hard housing; the outside plate gas distribution device comprises a-working gas flow distribution device and a heat dissipation gas distribution device; the working gas flow distribution device is provided with a fan mount (112) for connecting with a working fan, and the working gas flow distribution device extends into the inner cavity of the hard housing from outside of the hard housing; the gas flow outlet of the working gas flow distribution device is connected with the air inlet gas distribution nozzle of each unit cell in the cell pack;
the heat dissipation gas distribution device comprises a heat dissipation channel (1111) set outside the hard housing and interconnected with the inner cavity of the hard housing, and a heat dissipation port set on the hard housing; the heat dissipation channel is provided with a heat dissipation fan mount (112) for connecting with a heat dissipation fan;
the hard housing for encapsulating the fuel cell stack assembly comprises a gland (60), two concave-shaped plates (61), a top plate, a bottom plate, a side plate (62) and a flange plate (63);
the two concave-shaped plates (61) are set oppositely, one end of a concave-shaped plate is fixedly connected with the side plate (62) and the other end is fixed with the gland (60) through the flange plate (63);
power source interfaces of two kinds of polarities are set on the gland (60) and the side plate (62), respectively;
the gland (60) is provided with a fuel gas inlet (65) and the side plate (62) is provided with a fuel gas outlet (66);
the cell pack comprises a plurality of individual cells connected in series, each of the individual cells comprises an anode guide plate (21), a membrane electrode and a cathode guide plate (22);
the front of the anode guide plate and the front of the cathode guide plate are adjacent to two side surfaces of the membrane electrode, respectively; the back of the anode guide plate is adjacent to the cathode guide plate of another unit cell; the back of the cathode guide plate is adjacent to the anode guide plate of another unit cell;
the anode guide plate is provided with a main hydrogen gas inlet (311) and a main hydrogen gas outlet (315), the front of the anode guide plate is provided with a hydrogen guide groove (313) and the back is provided with a first air inlet gas distribution nozzle (317) and a first air inlet groove (320) interconnected with the first air inlet gas distribution nozzle; the back of the anode guide plate is further provided with a first heat dissipation groove and a first air exhaust groove;
the cathode guide plate is provided with a main hydrogen gas inlet (321) and a main hydrogen gas outlet (324), the front of the cathode guide plate is provided with an air inlet (325), an air outlet (322) and an air guide groove (323), and the back is provided with a second air inlet gas distribution nozzle and a second air inlet groove interconnected with the second air inlet gas distribution nozzle; when the cathode guide plate is matched with another anode guide plate, the first air inlet gas distribution nozzle and the second air inlet gas distribution nozzle form a complete air inlet gas distribution nozzle, and the first air inlet groove and the second air inlet groove form a complete air inlet channel; the air inlet on the front of the cathode guide plate is set in the air inlet channel;
the back of the cathode guide plate is further provided with a second head dissipation groove and a second air exhaust groove; the air outlet on the front of the cathode is interconnected with the second air exhaust groove on the back of the cathode guide plate;
the main hydrogen gas inlets and the main hydrogen gas outlets of all the unit cells in the cell pack is interconnected with each other, and the main hydrogen gas inlets on all unit cells in the cell pack connected with an external hydrogen gas source via a hole set on the housing;
the air inlet gas distribution nozzle on each unit cell in the cell pack is respectively interconnected with the gas flow outlet of the working gas flow distribution device;
the first heat dissipation groove on the back of the anode guide plate and the second heat dissipation groove on the back of the cathode guide plate are combined into a heat dissipation channel;
the second air exhaust groove on the back of the cathode guide plate and the first air exhaust groove on the back of the anode are combined into an exhaust gas channel;
the back of the anode guide plate and the back of the cathode guide plate are provided with a plurality of reinforcing ribs, the reinforcing ribs form a turbulator in the first heat dissipation groove (319) and the second heat dissipation groove (330).

2. The hydrogen fuel cell according to claim 1, **characterized in that** the working gas flow distribution device comprises a gas distribution manifold (114), a gas distribution groove (113) and a gas flow outlet (115);
the gas distribution manifold is located outside the hard housing and fixed on the top plate of the hard housing; the gas distribution manifold is interconnected with the gas distribution groove; the gas distribution groove extends into the inner cavity of the hard housing; the gas flow outlet is formed on the bottom of the gas distribution groove; the gas flow outlet is interconnected with the air inlet gas distribution nozzle of each unit cell in the cell pack;
the gas distribution manifold is provided with the fan mount for connecting with the working fan.

3. The hydrogen fuel cell according to claim 2, **characterized in that** the outside plate gas distribution device is a double-side gas distribution device; the working gas flow distribution device is set on the top plate (123) of the hard housing; the heat dissipation channel of the heat dissipation gas distribution device is set on the bottom plate (124) of the hard housing.

4. The hydrogen fuel cell according to claim 3, **characterized in that** the heat dissipation channel (127) is a heat dissipation air collection chamber interconnected with the inner cavity of the hard housing; the heat dissipation air collection chamber is interconnected with the heat dissipation fan mount (125); the heat dissipation port is set on the top plate of the housing; the heat dissipation fan blows air into the inner cavity of the hard housing or pumps air out of the inner cavity of the hard housing; the air flows out of the inner cavity of the hard housing or flows into the inner cavity of the hard housing via the heat dissipation port (130) on the top plate of the hard housing.

5. The hydrogen fuel cell according to claim 1, **characterized in that** the anode guide plate is a guide plate with double gas inlets at the two sides and gas outlet in the middle; there are two main hydrogen gas inlets set at the two sides of the anode guide plate, respectively, and there is one main hydrogen gas outlet set in the middle of the anode guide plate; hydrogen enters into the anode guide plate through the two sides of the anode guide plate, flows from the two sides towards the middle and is exhausted from the main hydrogen gas outlet in the middle;
the cathode guide plate is a guide plate with gas inlet in the middle and double gas outlets at the two sides; air enters the air inlet from the air inlet channel in the middle of the cathode guide plate, flows from the middle towards the two sides and is exhausted from the exhaust gas channels at the two sides.

6. The hydrogen fuel cell according to claim 1, **characterized in that** the anode guide plate is provided with one main hydrogen gas inlet set on one side of the anode guide plate and there is one main hydrogen gas outlet set on the other side of the anode guide plate.

7. The hydrogen fuel cell according to claim 6, **characterized in that** the two ends of the hydrogen guide groove on the front of the anode guide plate are provided with a first gas guide hole and a second gas guide hole; the first gas guide hole is on the back of the anode guide plate and interconnected with the main hydrogen gas inlet; the second gas guide hole is on the back of the anode guide plate and interconnected with the main hydrogen gas outlet.

8. The hydrogen fuel cell according to claim 1, claim 5 or claim 6, **characterized in that** the hydrogen guide groove is arranged longitudinally and the air guide groove is arranged transversely.

9. The hydrogen fuel cell according to any one of claims 1 to 6 or claim 9, **characterized in that** a plurality of fuel cell stack assemblies are encapsulated by the hard housing and are integrated together as a whole composite structure; more than two groups of the fuel cell stack assemblies are connected in series; the power supply plates at the head and the end of the fuel cell stack assemblies connected in series are respectively connected with two power source interfaces with opposite polarities on the hard housing.

10. The hydrogen fuel cell according to claim 9, **characterized in that** when the fuel cell stack assemblies are set in parallel in the inner cavity of the housing, the working gas flow distribution device further comprises a gas flow distribution pipe; the gas flow distribution pipe comprises a gas flow inlet and more than two gas flow distribution ports; the gas flow inlet is interconnected with the working fan; the number of the gas flow distribution ports is matched with the number of fuel cell stacks in parallel assemblies.

## Patentansprüche

1. Wasserstoffbrennstoffzelle, die eine Brennstoffzellenstapelanordnung und eine Außenplatten-Gasverteilungsvorrichtung umfasst;
wobei
die Brennstoffzellenstapelanordnung eine erste isolierende Platte, eine erste Stromversorgungsplatte (71), einen Zellenstapel, eine zweite Stromversorgungsplatte (72) und eine zweite isolierende Platte (73) umfasst, die in Serie angeordnet sind;
die erste Stromversorgungsplatte (71) und die zweite Stromversorgungsplatte (72) als Anodenausgang bzw. Kathodenausgang des Zellenstapels dienen;
die Brennstoffzellenstapelanordnung mit einem harten Gehäuse ummantelt ist;
**dadurch gekennzeichnet, dass**
die Außenplatten-Gasverteilungsvorrichtung an dem harten Gehäuse befestigt ist; die Außenplatten-Gasverteilungsvorrichtung eine Arbeitsgasstromverteilungsvorrichtung und eine Wärmeableitungsgasverteilungsvorrichtung umfasst;
die Arbeitsgasstromverteilungsvorrichtung mit einer Gebläsebefestigung (112) zum Verbinden mit einem Arbeitsgebläse versehen ist und die Arbeitsgasstromverteilungsvorrichtung sich von außerhalb des harten Gehäuses in den inneren Hohlraum des harten Gehäuses erstreckt;
der Gasstromauslass der Arbeitsgasstromverteilungsvorrichtung mit der Lufteinlassgasverteilungsdüse jeder Einheitszelle in dem Zellenstapel verbunden ist;
die Wärmeableitungsgasverteilungsvorrichtung einen Wärmeableitungskanal (1111), der außerhalb des harten Gehäuses angeordnet und mit dem inneren Hohlraum des harten Gehäuses verbunden ist, und eine Wärmeableitungsöffnung umfasst, die an dem harten Gehäuse angeordnet ist;
der Wärmeableitungskanal mit einer Wärmeableitungsgebläsebefestigung (112) zum Verbinden mit einem Wärmeableitungsgebläse versehen ist;
das harte Gehäuse zur Ummantelung der Brennstoffzellenstapelanordnung eine Stopfbuchse (60), zwei konkav geformte Platten (61), eine obere Platte, eine untere Platte, eine Seitenplatte (62) und eine Flanschplatte (63) umfasst;
die zwei konkav geformten Platten (61) einander gegenüberliegend angeordnet sind, wobei ein Ende einer konkav geformten Platte fest mit der Seitenplatte (62) verbunden ist und das andere Ende durch die Flanschplatte (63) mit der Stopfbuchse (60) verbunden ist;
Stromquellenschnittstellen zweier Arten von Polaritäten auf der Stopfbuchse (60) bzw. der Seitenplatte (62) angeordnet sind;
die Stopfbuchse (60) mit einem Brenngaseinlass (65) versehen ist und die Seitenplatte (62) mit einem Brenngasauslass (66) versehen ist;
der Zellenstapel eine Vielzahl von Einzelzellen umfasst, die in Serie geschaltet sind, wobei jede der Einzelzellen eine Anoden-Leitplatte (21), eine Membranelektrode und eine Kathoden-Leitplatte (22) umfasst;
die Vorderseite der Anoden-Leitplatte und die Vorderseite der Kathoden-Leitplatte jeweils an zwei Seitenflächen der Membranelektrode angrenzen;
die Rückseite der Anoden-Leitplatte an die Kathoden-Leitplatte einer anderen Einheitszelle angrenzt;
die Rückseite der Kathoden-Leitplatte an die Anoden-Leitplatte einer anderen Einheitszelle angrenzt;
die Anoden-Leitplatte mit einem Wasserstoffgas-Haupteinlass (311) und einem Wasserstoffgas-Hauptauslass (315) versehen ist, wobei die Vorderseite der Anoden-Leitplatte mit einer Wasserstoffleitnut (313) versehen ist und die Rückseite mit einer ersten Lufteinlassgasverteilungsdüse (317) und einer ersten Lufteinlassnut (320), die mit der ersten Lufteinlassgasverteilungsdüse verbunden ist, versehen ist;
die Rückseite der Anoden-Leitplatte ferner mit einer ersten Wärmeableitungsnut und einer ersten Luftaustrittsnut versehen ist;
die Kathoden-Leitplatte mit einem Wasserstoffgas-Haupteinlass (321) und einem Wasserstoffgas-Hauptauslass (324) versehen ist, wobei die Vorderseite der Kathoden-Leitplatte mit einem Lufteinlass (325), einem Luftauslass (322) und einer Luftleitnut (323) versehen ist und die Rückseite mit einer zweiten Lufteinlassgasverteilungsdüse und einer zweiten Lufteinlassnut, die mit der zweiten Lufteinlassgasverteilungsdüse verbunden ist, versehen ist;
beim Zusammenfügen der Kathoden-Leitplatte mit einer anderen Anoden-Leitplatte die erste Lufteinlassgasverteilungsdüse und die zweite Lufteinlassgasverteilungsdüse eine vollständige Lufteinlassgasverteilungsdüse bilden und die erste Lufteinlassnut und die zweite Lufteinlassnut einen vollständigen Lufteinlasskanal bilden;
der Lufteinlass auf der Vorderseite der Kathoden-Leitplatte in dem Lufteinlasskanal angeordnet ist;
die Rückseite der Kathoden-Leitplatte ferner mit einer zweiten Wärmeableitungsnut und einer zweiten Luftaustrittsnut versehen ist;
der Luftauslass auf der Vorderseite der Kathode mit der zweiten Luftaustrittsnut auf der Rückseite der Kathoden-Leitplatte verbunden ist;
die Wasserstoffgas-Haupteinlässe und die Wasserstoffgas-Hauptauslässe aller Einheitszellen in dem Zellenstapel miteinander verbunden sind und die Wasserstoffgas-Haupteinlässe an allen Einheitszellen in dem Zellenstapel über eine an dem Gehäuse angeordnete Öffnung mit einer externen Wasserstoffgasquelle verbunden sind;
die Lufteinlassgasverteilungsdüse an jeder Einheitszelle in dem Zellenstapel jeweils mit dem Gasstromauslass der Arbeitsgasstromverteilungsvorrichtung verbunden ist;
die erste Wärmeableitungsnut auf der Rückseite der Anoden-Leitplatte und die zweite Wärmeableitungsnut auf der Rückseite der Kathoden-Leitplatte zu einem Wärmeableitungskanal vereinigt sind;
die zweite Luftaustrittsnut auf der Rückseite der Kathoden-Leitplatte und die erste Luftaustrittsnut auf der Rückseite der Anode zu einem Abgaskanal vereinigt sind;
die Rückseite der Anoden-Leitplatte und die Rückseite der Kathoden-Leitplatte mit einer Vielzahl von Verstärkungsrippen versehen sind, wobei die Verstärkungsrippen einen Turbulator in der ersten Wärmeableitungsnut (319) und der zweiten Wärmeableitungsnut (330) bilden.

2. Wasserstoffbrennstoffzelle nach Anspruch 1,
**dadurch gekennzeichnet, dass**
die Arbeitsgasstromverteilungsvorrichtung einen Gasverteilerkanal (114), eine Gasverteilungsnut (113) und einen Gasstromauslass (115) umfasst;
der Gasverteilerkanal außerhalb des harten Gehäuses angeordnet und auf der oberen Platte des harten Gehäuses befestigt ist; der Gasverteilerkanal mit der Gasverteilungsnut verbunden ist; sich die Gasverteilungsnut in den inneren Hohlraum des harten Gehäuses erstreckt; der Gasstromauslass am Grund der Gasverteilungsnut ausgebildet ist; der Gasstromauslass mit der Lufteinlassgasverteilungsdüse jeder Einheitszelle in dem Zellenstapel verbunden ist;
der Gasverteilerkanal mit der Gebläsebefestigung zum Verbinden mit dem Arbeitsgebläse versehen ist.

3. Wasserstoffbrennstoffzelle nach Anspruch 2,
**dadurch gekennzeichnet, dass**
die Außenplatten-Gasverteilungsvorrichtung eine beidseitige Gasverteilungsvorrichtung ist;
die Arbeitsgasstromverteilungsvorrichtung auf der oberen Platte (123) des harten Gehäuses angeordnet ist;
der Wärmeableitungskanal der Wärmeableitungsgasverteilungsvorrichtung auf der unteren Platte (124) des harten Gehäuses angeordnet ist.

4. Wasserstoffbrennstoffzelle nach Anspruch 3,
**dadurch gekennzeichnet, dass**
der Wärmeableitungskanal (127) eine Wärmeableitungsluftsammelkammer ist, die mit dem inneren Hohlraum des harten Gehäuses verbunden ist;
die Wärmeableitungsluftsammelkammer mit der Wärmeableitungsgebläsebefestigung (125) verbunden ist;
die Wärmeableitungsöffnung an der oberen Platte des Gehäuses angeordnet ist;
das Wärmeableitungsgebläse Luft in den inneren Hohlraum des harten Gehäuses bläst oder Luft aus dem inneren Hohlraum des harten Gehäuses herauspumpt;
die Luft über die Wärmeableitungsöffnung (130) an der oberen Platte des harten Gehäuses aus dem inneren Hohlraum des harten Gehäuses herausströmt oder in den inneren Hohlraum des harten Gehäuses hineinströmt.

5. Wasserstoffbrennstoffzelle nach Anspruch 1,
**dadurch gekennzeichnet, dass**
die Anoden-Leitplatte eine Leitplatte mit doppelten Gaseinlässen an den beiden Seiten und einem Gasauslass in der Mitte ist;
zwei Wasserstoffgas-Haupteinlässe jeweils an den beiden Seiten der Anoden-Leitplatte angeordnet sind und ein Wasserstoffgas-Hauptauslass in der Mitte der Anoden-Leitplatte angeordnet ist;
Wasserstoff über die beiden Seiten der Anoden-Leitplatte in die Anoden-Leitplatte eintritt, von den beiden Seiten zur Mitte strömt und aus dem Wasserstoffgas-Hauptauslass in der Mitte herausströmt;
die Kathoden-Leitplatte eine Leitplatte mit einem Gaseinlass in der Mitte und doppelten Gasauslässen an den beiden Seiten ist;
Luft aus dem Lufteinlasskanal in der Mitte der Kathoden-Leitplatte in den Lufteinlass eintritt, von der Mitte zu den beiden Seiten strömt und aus den Abgaskanälen an den beiden Seiten herausströmt.

6. Wasserstoffbrennstoffzelle nach Anspruch 1,
**dadurch gekennzeichnet, dass**
die Anoden-Leitplatte mit einem Wasserstoffgas-Haupteinlass versehen ist, der auf einer Seite der Anoden-Leitplatte angeordnet ist, und auf der anderen Seite der Anoden-Leitplatte ein Wasserstoffgas-Hauptauslass angeordnet ist.

7. Wasserstoffbrennstoffzelle nach Anspruch 6,
**dadurch gekennzeichnet, dass**
die beiden Enden der Wasserstoffleitnut auf der Vorderseite der Anoden-Leitplatte mit einer ersten Gasleitöffnung und einer zweiten Gasleitöffnung versehen sind;
die erste Gasleitöffnung auf der Rückseite der Anoden-Leitplatte angeordnet und mit dem Wasserstoffgas-Haupteinlass verbunden ist;
sich die zweite Gasleitöffnung auf der Rückseite der Anoden-Leitplatte befindet und mit dem Wasserstoffgas-Hauptauslass verbunden ist.

8. Wasserstoffbrennstoffzelle nach Anspruch 1, Anspruch 5 oder Anspruch 6,
**dadurch gekennzeichnet, dass**
die Wasserstoffleitnut in Längsrichtung angeordnet ist und die Luftleitnut in Querrichtung angeordnet ist.

9. Wasserstoffbrennstoffzelle nach einem der Ansprüche 1 bis 6 oder Anspruch 9,
**dadurch gekennzeichnet, dass**
eine Vielzahl von Brennstoffzellenstapelanordnungen von dem harten Gehäuse ummantelt sind und als eine Gesamtverbundstruktur gemeinsam eingebaut sind;
mehr als zwei Gruppen der Brennstoffzellenstapelanordnungen in Serie geschaltet sind;
die Stromversorgungsplatten am Kopf und am Ende der in Serie geschalteten Brennstoffzellenstapelanordnungen jeweils mit zwei Stromquellenschnittstellen mit entgegengesetzten Polaritäten auf dem harten Gehäuse verbunden sind.

10. Wasserstoffbrennstoffzelle nach Anspruch 9,
**dadurch gekennzeichnet, dass**,
wenn die Brennstoffzellenstapelanordnungen in dem inneren Hohlraum des Gehäuses parallel angeordnet sind, die Arbeitsgasstromverteilungsvorrichtung ferner eine Gasstromverteilungsleitung umfasst;
die Gasstromverteilungsleitung einen Gasstromeinlass und mehr als zwei Gasstromverteilungsöffnungen umfasst;
der Gasstromeinlass mit dem Arbeitsgebläse verbunden ist; die Zahl der Gasstromverteilungsöffnungen der Zahl der Brennstoffzellenstapel in parallelen Anordnungen entspricht.

## Revendications

1. Pile à combustible à hydrogène, comprenant un ensemble d'empilement de piles à combustible et un dispositif de distribution de gaz à plaques extérieur ; l'ensemble d'empilement de piles à combustible comprend une première plaque isolante, une première plaque d'alimentation électrique (71), un bloc-pile, une deuxième plaque d'alimentation électrique (72) et une deuxième plaque isolante (73) placés en série ; la première plaque d'alimentation électrique (71) et la deuxième plaque d'alimentation électrique (72) fonctionnent respectivement comme la sortie anode et la sortie cathode du bloc-pile ;
l'ensemble d'empilement de piles à combustible est encapsulé avec un boîtier dur ;
**caractérisée en ce que** le dispositif de distribution de gaz à plaques extérieur est fixé sur le boîtier dur ; le dispositif de distribution de gaz à plaques extérieur comprend un dispositif de distribution à écoulement de gaz de travail et un dispositif de distribution de gaz de dissipation de chaleur ; le dispositif de distribution à écoulement de gaz de travail est pourvu d'une monture pour ventilateur (112) pour connexion à un ventilateur de travail, et le dispositif de distribution à écoulement de gaz de travail s'étend dans la cavité intérieure du boîtier dur depuis l'extérieur du boîtier dur ; la sortie d'écoulement de gaz du dispositif de distribution à écoulement de gaz de travail est connectée à la buse de distribution de gaz d'entrée d'air de chaque pile unitaire du bloc-pile ;
le dispositif de distribution de gaz de dissipation de chaleur comprend un canal de dissipation de chaleur (1111) placé à l'extérieur du boîtier dur et interconnecté à la cavité intérieure du boîtier dur, et un orifice de dissipation de chaleur placé sur le boîtier dur ; le canal de dissipation de chaleur est pourvu d'une monture pour ventilateur de dissipation de chaleur (112) pour connexion à un ventilateur de dissipation de chaleur ;
le boîtier dur pour encapsuler l'ensemble d'empilement de piles à combustible comprend un fouloir (60), deux plaques de forme concave (61), une plaque supérieure, une plaque inférieure, une plaque latérale (62) et une plaque à bride (63) ;
les deux plaques de forme concave (61) sont placées de manière opposée, une extrémité d'une plaque de forme concave est connectée à demeure à la plaque latérale (62) et l'autre extrémité est fixée au fouloir (60) par l'intermédiaire de la plaque à bride (63) ;
des interfaces de source électrique de deux types de polarités sont agencées sur le fouloir (60) et la plaque latérale (62), respectivement ;
le fouloir (60) est pourvu d'une entrée de gaz combustible (65) et la plaque latérale (62) est pourvue d'une sortie de gaz combustible (66) ;
le bloc-pile comprend une pluralité de piles individuelles connectées en série, chacune des piles individuelles comprend une plaque de guidage anode (21), une électrode à membrane et une plaque de guidage cathode (22) ;
l'avant de la plaque de guidage anode et l'avant de la plaque de guidage cathode sont adjacents à deux surfaces latérales de l'électrode à membrane, respectivement ; l'arrière de la plaque de guidage anode est adjacent à la plaque de guidage cathode d'une autre pile unitaire ; l'arrière de la plaque de guidage cathode est adjacent à la plaque de guidage anode d'une autre pile unitaire ;
la plaque de guidage anode est pourvue d'une entrée principale de gaz hydrogène (311) et d'une sortie principale de gaz hydrogène (315), l'avant de la plaque de guidage anode est pourvu d'une rainure de guidage d'hydrogène (313) et l'arrière est pourvu d'une première buse de distribution de gaz d'entrée d'air (317) et d'une première rainure d'entrée d'air (320) interconnectée à la première buse de distribution de gaz d'entrée d'air ; l'arrière de la plaque de guidage anode est en outre pourvu d'une première rainure de dissipation de chaleur et d'une première rainure d'échappement d'air ;
la plaque de guidage cathode est pourvue d'une entrée principale de gaz hydrogène (321) et d'une sortie principale de gaz hydrogène (324), l'avant de la plaque de guidage cathode est pourvu d'une entrée d'air (325), d'une sortie d'air (322) et d'une rainure de guidage d'air (323), et l'arrière est pourvu d'une deuxième buse de distribution de gaz d'entrée d'air et d'une seconde rainure d'entrée d'air interconnectée à la deuxième buse de distribution de gaz d'entrée d'air ; quand la plaque de guidage cathode est accouplée à une autre plaque de guidage anode, la première buse de distribution de gaz d'entrée d'air et la deuxième buse de distribution de gaz d'entrée d'air forment une buse de distribution de gaz d'entrée d'air entière, et la première rainure d'entre d'air et la deuxième rainure d'entrée d'air forment un canal d'entrée d'air entier ; l'entrée d'air sur l'avant de la plaque de guidage cathode est placée dans le canal d'entrée d'air ;
l'arrière de la plaque de guidage cathode est en outre pourvu d'une deuxième rainure de dissipation de chaleur et d'une deuxième rainure d'échappement d'air ; la sortie d'air sur l'avant de la cathode est interconnectée à la deuxième rainure d'échappement d'air sur l'arrière de la plaque de guidage cathode ;
les entrées principales de gaz hydrogène et les sorties principales de gaz hydrogène de toutes les piles unitaires du bloc-pile sont interconnectées les unes aux autres, et les entrées principales de gaz hydrogène sur toutes les piles unitaires du bloc-pile connectées à une source de gaz hydrogène externe via un trou situé sur le boîtier ;
la buse de distribution de gaz d'entrée d'air sur chaque cellule unitaire du bloc-pile est respectivement interconnectée à la sortie d'écoulement de gaz du dispositif de distribution d'écoulement de gaz de travail ;
la première rainure de dissipation de chaleur sur l' arrière de la plaque de guidage anode et la deuxième rainure de dissipation de chaleur sur l'arrière de la plaque de guidage cathode sont combinées dans un canal de dissipation de chaleur ;
la deuxième rainure d'échappement d'air sur l'arrière de la plaque de guidage cathode et la première rainure d'échappement d'air sur l'arrière de l'anode sont combinées dans un canal de gaz d'échappement ;
l'arrière de la plaque de guidage anode et l'arrière de la plaque de guidage cathode sont pourvus d'une pluralité de nervures de renforcement, les nervures de renforcement forment un turbulateur dans la première rainure de dissipation de chaleur (319) et la deuxième rainure de dissipation de chaleur (330).

2. Pile à combustible à hydrogène selon la revendication 1, **caractérisée en ce que** le dispositif de distribution d'écoulement de gaz de travail comprend une tubulure de distribution de gaz (114), une rainure de distribution de gaz (113) et une sortie d'écoulement de gaz (115) ;
la tubulure de distribution de gaz se situe à l'extérieur du boîtier dur et est fixe sur la plaque supérieure du boîtier dur ; la tubulure de distribution de gaz est interconnectée à la rainure de distribution de gaz ; la rainure de distribution de gaz s'étend dans la cavité intérieure du boîtier dur ; la sortie d'écoulement de gaz est formée sur le fond de la rainure de distribution de gaz ; la sortie d'écoulement de gaz est interconnectée à la buse de distribution de gaz d'entrée d'air de chaque pile unitaire du bloc-pile ;
la tubulure de distribution de gaz est pourvue de la monture pour ventilateur pour connexion au ventilateur de travail.

3. Pile à combustible à hydrogène selon la revendication 2, **caractérisée en ce que** le dispositif de distribution de gaz à plaques extérieur est un dispositif de distribution de gaz à deux côtés ; le dispositif de distribution d'écoulement de gaz de travail est placé sur la plaque supérieure (123) du boîtier dur ; le canal de dissipation de chaleur du dispositif de distribution de gaz de dissipation de chaleur est placé sur la plaque inférieure (124) du boîtier dur.

4. Pile à combustible à hydrogène selon la revendication 3, **caractérisée en ce que** le dispositif de dissipation de chaleur (127) est une chambre de collecte d'air à dissipation de chaleur interconnectée à la cavité intérieure du boîtier dur ; la chambre de collecte d'air à dissipation de chaleur est interconnectée à la monture pour ventilateur de dissipation de chaleur (125) ; l'orifice de dissipation de chaleur est placé sur la plaque supérieure du boîtier ; le ventilateur de dissipation de chaleur souffle de l'air dans la cavité intérieure du boîtier dur ou pompe l'air hors de la cavité intérieure du boîtier dur ; l'air s'écoule hors de la cavité intérieure du boîtier dur ou s'écoule dans la cavité intérieure du boîtier dur par le biais de l'orifice de dissipation de chaleur (130) sur la plaque supérieure du boîtier dur.

5. Pile à combustible à hydrogène selon la revendication 1, **caractérisée en ce que** la plaque de guidage anode est une plaque de guidage dotée de doubles entrées de gaz au niveau des deux côtés et d'une sortie de gaz au milieu ; il y a deux entrées principales de gaz hydrogène placées au niveau des deux côtés de la plaque de guidage anode, respectivement, et il y a une seule sortie principale de gaz hydrogène placée au milieu de la plaque de guidage anode ; l'hydrogène entre dans la plaque de guidage anode par les deux côtés de la plaque de guidage anode, s'écoule depuis les deux côtés vers le milieu et est évacué par la sortie principale de gaz hydrogène au milieu ;
la plaque de guidage cathode est une plaque de guidage pourvue d'une entrée de gaz au milieu et de doubles sorties de gaz au niveau des deux côtés ; l'air entre dans l'entrée d'air depuis le canal d'entrée d'air au milieu de la plaque de guidage cathode, s'écoule depuis le milieu vers les deux côtés et est évacué depuis les canaux de gaz d'échappement au niveau des deux côtés.

6. Pile à combustible à hydrogène selon la revendication 1, **caractérisée en ce que** la plaque de guidage anode est pourvue d'une entrée principale de gaz hydrogène placée sur un côté de la plaque de guidage anode et il y a une sortie principale de gaz hydrogène placée sur l'autre côté de la plaque de guidage anode.

7. Pile à combustible à hydrogène selon la revendication 6, **caractérisée en ce que** les deux extrémités de la rainure de guidage d'hydrogène sur l'avant de la plaque de guidage anode sont pourvues d'un premier trou de guidage de gaz et d'un deuxième trou de guidage de gaz ; le premier trou de guidage de gaz se situe sur l'arrière de la plaque de guidage anode et est interconnecté à l'entrée principale de gaz hydrogène ; le deuxième trou de guidage de gaz se situe sur l'arrière de la plaque de guidage anode et est interconnecté à la sortie principale de gaz hydrogène.

8. Pile à combustible à hydrogène selon la revendication 1, la revendication 5 ou la revendication 6, **caractérisée en ce que** la rainure de guidage d'hydrogène est agencée longitudinalement et la rainure de guidage d'air est agencée transversalement.

9. Pile à combustible à hydrogène selon l'une quelconque des revendications 1 à 6 ou la revendication 9, **caractérisée en ce qu'**une pluralité d'ensembles d'empilement de piles à combustible sont encapsulés par le boîtier dur et sont intégrés ensemble sous forme de structure composite globale ; plus de deux groupes des ensembles d'empilement de piles à combustible sont connectés en série ; les plaques d'alimentation électrique au niveau de la tête et de l'extrémité des ensembles d'empilement de piles à combustible connectés en série sont respectivement connectées aux deux interfaces de source électrique avec des polarités opposées sur le boîtier dur.

10. Pile à combustible à hydrogène selon la revendication 9, **caractérisée en ce que**, lorsque les ensembles d'empilement de piles à combustible sont placés en parallèle dans la cavité intérieure du boîtier, le dispositif de distribution d'écoulement de gaz de travail comprend en outre un tuyau de distribution d'écoulement de gaz ; le tuyau de distribution d'écoulement de gaz comprend une entrée d'écoulement de gaz et plus de deux orifices de distribution d'écoulement de gaz ; l'entrée d'écoulement de gaz est interconnectée au ventilateur de travail ; le nombre des orifices de distribution d'écoulement de gaz correspondant au nombre des empilements de piles à combustible dans des ensembles parallèles.
